# EUROPEAN PATENT APPLICATION

(11) **EP 4 730 000 A1**
(43) Date of publication of application: **22.04.2026**
(21) Application number: 24206647.0
(22) Date of filing: 15.10.2024
(51) Int. Cl.: G02B 6/12, G02B 6/30, G02B 6/42, G02B 6/124, G02B 6/28

(54) **SYSTEM AND METHOD USING A PHOTONIC CIRCUIT FOR DETERMINING BEAM DIRECTION AND POSITION**

(71) Applicant: Nederlandse Organisatie voor toegepast- natuurwetenschappelijk onderzoek TNO, 2595 DA 's-Gravenhage (NL)
(72) Inventor: COGNÉE, Kévin Georges Guy, 2595 DA 's-Gravenhage (NL)
(74) Representative: V.O.

(57) **Abstract**

An optical system (100) and method for processing one or more optical beams. At least one optical coupling surface (10) is configured to receive an incoming optical beam (Lin). A first photonic circuit (30) is configured to receive a first set of optical signals (L1) from the optical coupling surface (10) and interferometrically combine these signals to cause generation of a second set of optical signals (L2) including separate tip and tilt signals (Lx,Ly) indicative of the respective angles (Ax,Ay) and/or positions (DX,DY) of the incoming optical beam (Lin) on the optical coupling surface (10). Simultaneously, one or more optical data reception signals (Lr) may be generated separately from the tip and tilt signals (Lx,Ly). Advantageously, the optical system (100) may be used for improving and/or maintaining alignment in an optical communication device.

## Description

### TECHNICAL FIELD AND BACKGROUND

The present disclosure relates to systems and method for processing an incoming optical beam, in particular for determining, and possibly controlling, a direction and/or position of the beam on an optical coupling surface, wherein the beam may be used for receiving information.

Applications that utilize optical signals for information transfer, such as free-space optical communication systems, require precise alignment between the transmitter and receiver to ensure optimal data reception and/or transmission. Maintaining this alignment necessitates a mechanism for accurately measuring the direction of incoming optical beams, specifically their tip and tilt angles relative to the receiver's orientation.

Traditional solutions for measuring beam direction include quadrant photodetectors and focal plane arrays (cameras), which divide the incoming beam into multiple segments to detect position changes. While these methods are straightforward, they often lack sensitivity and lose critical phase and polarization information, limiting their accuracy and effectiveness in advanced communication systems.

Wavefront sensors like Shack-Hartmann sensors and various interferometric techniques (e.g., Mach-Zehnder, Michelson, Fizeau interferometers) offer higher accuracy by detecting optical aberrations, including tip and tilt. However, these systems are typically bulky, complex, and overqualified for applications requiring only directional information. They also tend to consume more power and are less mechanically stable due to their reliance on bulk optical components.

Techniques involving multiplane light conversion, photonic lanterns, and integrated photonic spatial (de)multiplexers often suffer from high optical losses, and limited integration, and are not specifically optimized for tip and tilt measurements. For example, the output optical signals typically cannot be used to directly control actuators such as mirrors for alignment correction, limiting their applicability in systems requiring simultaneous data reception and real-time beam alignment. Additionally, photonic circuits may not efficiently utilize the incoming optical power, as the light being used for alignment purposes comes at the detriment of light being used for data reception.

Therefore, there is a need for an optical system that can accurately measure the direction of an incoming optical beam while being compact, mechanically stable, power-efficient, and capable of integrating additional functionalities such as optical communication.

### SUMMARY

Aspects of the present invention can be embodied as systems and methods for processing an incoming optical beam. An optical coupling surface is configured to receive the incoming optical beam. A first set of waveguides is optically coupled to the receiving surface to collect a first set of optical signals resulting from the beam. A first photonic circuit is designed to combine these signals to produce a second set of optical signals. The second set of signals includes at least a tip signal indicative of the beam's tip angle along a first direction and/or its displacement along that direction. The second set of signals may further include a tilt signal indicative of the beam's tilt angle along a second, perpendicular direction and/or its displacement along that direction.

By integrating the optical coupling surface with the first set of waveguides and the photonic circuit, the system may effectively convert spatial variations of the incoming beam into distinct optical signals representing its angular deviations. This configuration may allow for precise measurement and monitoring of the beam's alignment in two perpendicular directions.

Preferably, the first photonic circuit is configured to generate the tip and tilt signals in isolation from each other. The tip signal is transmitted via a first waveguide, while the tilt signal is transmitted via a second, separate waveguide. By isolating these signals, the system enhances the accuracy and speed of detecting angular deviations, facilitating independent processing of each signal.

When the incoming optical beam is used for receiving data, the first photonic circuit may additionally generate an optical data reception signal indicative of the received data, which can be passed through a third waveguide separate from the tip and tilt signals. This integration allows simultaneous data reception and beam alignment monitoring within the same system, enhancing efficiency in optical communication applications.

Advantageously, the optical intensity of the tip and tilt signals may be minimized when the respective angles or displacements are zero, while maximizing the intensity of the optical data reception signal under optimal alignment. By this design, the system ensures that most optical power is dedicated to data reception when the beam is properly aligned, and that tip and tilt signals become significant only during misalignment. This efficient power allocation may aid in the automatic correction of beam deviations.

Preferably, the first photonic circuit includes an optical interferometric arrangement that combines the first set of optical signals such that the tip and tilt signals result from constructive and destructive interference of different subcomponents. By employing interferometric techniques, the system may preserve the phase information of the incoming beam, leading to more accurate and less noisy measurements compared to systems that process signals after photodetection.

Preferably, the optical coupling surface comprises a single optical coupler with at least four outputs, configured to couple different parts of the incoming beam into the first set of waveguides. By connecting different waveguides at various locations around the receiving surface, the system may effectively sample different spatial regions of the beam, which enhances the precision of angular deviation detection.

Alternatively, or in addition, the first photonic circuit may utilize a set of optical combiners, each combining signals from opposite sides of the receiving surface to generate the tip and tilt signals separately. Alternatively, it can also be envisaged that some or even all of the optical signals originate from the same side of the optical coupling surface. This arrangement allows for the isolation and independent processing of angular information along each direction, improving the system's responsiveness to misalignments. By configuring the first set of waveguides to receive different spatial modes of the incoming beam via mode demultiplexing, the system can further refine the detection of angular deviations. A respective pair of waveguides on one or more sides of the receiving surface may act as a mode demultiplexer, funneling the fundamental mode into one waveguide and higher-order modes into adjacent waveguides. This separation of spatial modes enhances the system's sensitivity to beam alignment.

In some embodiments, the system may include six (or more) waveguides and is capable of outputting tip and tilt signals selectively for different polarizations of the incoming beam. This feature may allow the system to accommodate various polarization states, increasing its versatility in different optical applications.

The system may comprise or couple with a set of photodetectors configured to receive the tip and tilt optical signals and convert them into electrical signals indicative of the magnitude and direction of the beam's angular deviations. By transforming optical signals into electrical ones, the system facilitates integration with control electronics for real-time beam alignment adjustments.

In some embodiments, the system includes a second photonic circuit designed to receive the tip and tilt signals and process them interferometrically with a reference optical signal, generating a third set of optical signals. The reference signal can be derived from a portion of the incoming beam or from an externally generated local oscillator. By interferometrically combining these signals, the system can determine both the magnitude and sign of the beam's angular deviations, providing comprehensive alignment information. The second photonic circuit may feature optical combiners that produce separate output signals indicative of positive and negative directions of the tip and tilt angles. These signals are measured by balanced photodiodes, generating electrical signals proportional to the deviations. This arrangement allows for precise determination of the beam's misalignment direction, enabling targeted corrective actions.

By utilizing the electrical signals generated from the tip and tilt measurements, the system can (directly) control one or more actuators to adjust the beam's angular direction or position on the receiving surface. The magnitude of these electrical signals may be proportional to the deviation from optimal alignment, facilitating a closed-loop feedback mechanism for automatic beam alignment correction.

The inventor finds that performing signal processing in the optical domain before converting to electrical signals may reduce noise accumulation and/or preserve the phase information of the incoming beam. This approach leads to more accurate measurements and improved system performance compared to conventional methods that rely on electronic signal processing post-detection.

Without being bound by theory, the use of integrated photonic circuits over traditional bulk or fiber optics may offer significant advantages. These include improved signal quality due to reduced optical losses, enhanced mechanical stability, and reductions in size and weight. Additionally, integrated photonic circuits have the potential for lower power consumption and cost, making the system more efficient and economically viable.

In conclusion, the features of the invention synergistically work together to provide a compact, efficient, and precise system for processing incoming optical beams. By accurately detecting angular deviations and facilitating real-time adjustments, the system addresses the critical need for precise beam control in optical communication and other applications. The integration of data reception capabilities further enhances the system's utility, making it a significant advancement over prior art in the field of optical beam processing.

### BRIEF DESCRIPTION OF DRAWINGS

These and other features, aspects, and advantages of the apparatus, systems, and methods of the present disclosure will become better understood from the following description, appended claims, and accompanying drawing wherein:
FIG 1A illustrates an optical system for processing an optical beam;
FIG 1B illustrates a perspective view of the optical beam impinging an optical coupling surface;
FIG 1C illustrates a top view of the optical coupling surface;
FIG 2A illustrates the optical coupling surface embodied as a 2D star coupler;
FIGs 2B and 2C illustrate the mixing of optical signals from the 2D star coupler;
FIG 3A illustrates the optical coupling surface embodied as a 1D grating coupler with mode demultiplexers;
FIGs 3B and 3C illustrate the mixing of optical signals from the 1D grating coupler;
FIG 4 illustrates a 2D star-coupler with mode demultiplexers;
FIG 5 illustrates a segmented optical coupling surface;
FIG 6 illustrates further aspects of a system for processing an incoming optical beam, in particular for generating a set of electrical signals indicative of the tip, tilt, and data contents of the optical beam;
FIG 7A illustrates measuring the tip signal and tip signal by using part of the incoming optical beam itself as reference;
FIG 7B illustrates measuring the tip signal and tip signal by using an externally generated local oscillator signal as reference;
FIG 8 illustrates further aspects of a system for processing one or more optical beams.
FIGs 9A-9C illustrate systems for optical communication, in particular for receiving and processing an incoming optical beam, and transmitting an outgoing optical beam;
FIG 10 illustrates further details of an architecture for optical communication.

### DESCRIPTION OF EMBODIMENTS

Terminology used for describing particular embodiments is not intended to be limiting to the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step, or one or more intermediate steps may be carried out before carrying out the particular step, unless specified otherwise. Likewise, it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

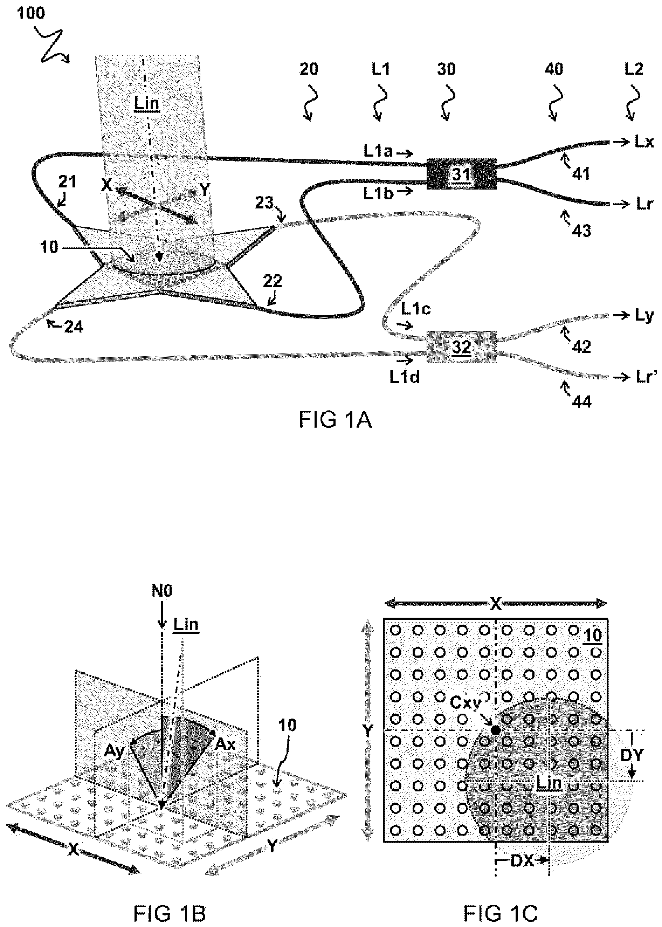

FIG 1A illustrates a system 100 for processing an incoming optical beam "Lin". The system 100 comprises at least one optical coupling surface 10 configured to receive the incoming optical beam "Lin". A first set of waveguides 20 is configured to optically couple with the at least one optical coupling surface 10 to respectively receive a first set of optical signals L1 resulting from the incoming optical beam "Lin". The system 100 comprises at least one photonic circuit 30 configured to combine respective signals of the first set of optical signals L1 to cause the generation of a second set of optical signals L2 respectively transmitted via a second set of waveguides 40. The second set of optical signals L2 comprises at least one of, preferably both of, a tip signal Lx and a tilt signal Ly.

Preferably, the at least one optical coupling surface 10 comprises at least one optical input coupler configured to couple respective parts of the (free-space) incoming optical beam "Lin" into the first set of waveguides 20. For example, the optical coupling surface 10 comprises a 1D or 2D grating coupler, or any other photonic structure capable of coupling with the incoming light beam and funneling the light into respective waveguides. Optionally, bulk optics components, fiber optics, grating, or meta-surfaces can be used to modify the incoming beam in a controlled way to adapt the incoming light field to the requirement of the photonic circuit, for example by focusing the light, changing the polarization state, or filtering out unwanted light.

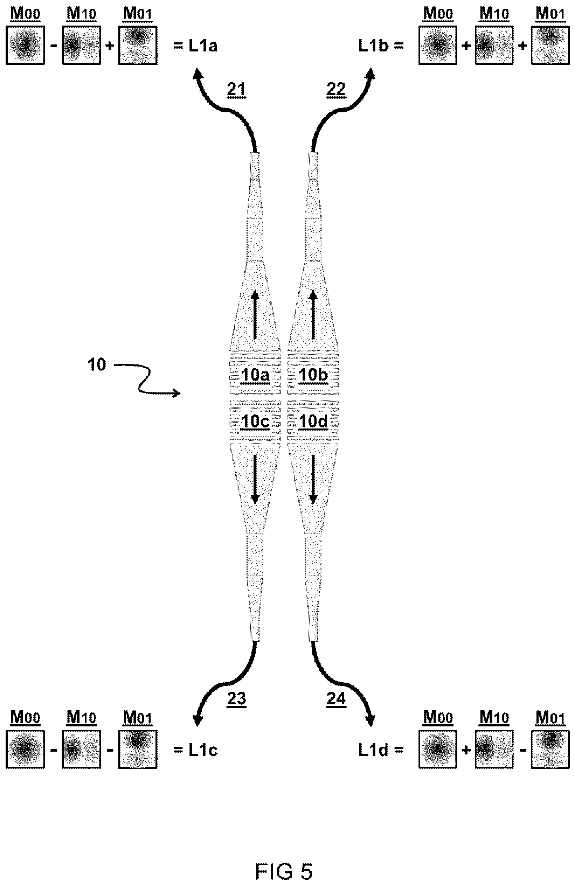

In a preferred embodiment, multiple waveguides of the first set of waveguides 20 are optically coupled with one optical coupling surface. Most preferably, e.g. as shown in FIG 1A, all waveguides 21,22,23,24 of the first set of waveguides 20 are optically coupled to a single optical coupling surface 10. In this way, photons from any part of the incoming optical beam "Lin", impinging anywhere on the single optical coupling surface 10, may, in principle, be funneled into any one or more of the first set of waveguides 20. In another or further embodiment, e.g. as shown in FIG 5, the optical coupling surface 10 may be segmented to selectively funnel respective parts of the incoming optical beam "Lin" into a respective one or more waveguides which are connected to a respective segment 10a, 10b, 10c, 10d of the optical coupling surface 10.

FIG 1B illustrates a perspective view of the incoming optical beam "Lin" impinging the optical coupling surface 10 of the optical system 100, with the incoming optical beam "Lin" having a tip angle Ax and tilt angle Ay. FIG 1C illustrates a top view of the optical coupling surface 10 showing a light spot of the incoming optical beam "Lin" having respective displacements DX, DY in different directions. As shown in FIG 1B, the tip signal Lx, as produced by the first photonic circuit 30 of FIG 1A, may be indicative of a tip angle Ax of the incoming optical beam "Lin" along a first direction X with respect to the optical coupling surface 10. Alternatively, or in addition, as shown in FIG 1C, the tip signal Lx may be indicative of a first relative displacement DX of the incoming optical beam "Lin" along the first direction X. The tilt signal Ly, as produced by the first photonic circuit 30, may be indicative of a tilt angle Ay of the incoming optical beam "Lin" along a second direction Y with respect to the optical coupling surface 10, perpendicular to the first direction X. Alternatively, or in addition, the tilt signal Ly may be indicative of a second relative displacement DY of the incoming optical beam "Lin" along the second direction Y.

In general, before the first photonic circuit 30, each of the first set of optical signals L1, coming from the optical coupling surface 10, may comprise a respective mixed signal. Typically, none of these mixed signals purely consist of the tip signal Lx or the tilt signal Ly, but includes at least one additional signal. Typically, the additional signal may be a common signal, e.g. indicative of the overall beam intensity and/or polarization, and not specifically indicative of the tip angle Ax, first relative displacement DX, tilt angle Ay, or second relative displacement DY. When the incoming optical beam "Lin" is used for optical communication this common signal may also be referred to as the optical data reception signal Lr, and the isolation thereof may be particularly useful for retrieving said information independent of the beam angle/position.

By suitably combining respective mixed signals of the first set of optical signals L1, e.g. using optical interference, the tip signal Lx and the tilt signal Ly may be isolated from each other and isolated from the common signal. Preferably, the magnitude and/or phase of the isolated tip signal Lx are uniquely dependent (most preferably linearly dependent) on the tip angle Ax and/or first relative displacement DX; and the magnitude and/or phase of the isolated tilt signal Ly are preferably uniquely dependent (most preferably linearly dependent) on the tilt angle Ay and/or second relative displacement DY. In this way, the tip signal Lx and/or tilt signal Ly may be measured to determine, e.g. by a controller, one or more of the tip angle Ax, tilt angle Ay, first relative displacement DX, second relative displacement DY.

In a preferred embodiment, the at least one photonic circuit, e.g. first photonic circuit 30, is configured to cause the generation of the tip signal Lx and tilt signal Ly in isolation from each other. More preferably, the tip signal Lx and the tilt signal Ly are independent signals, i.e. orthogonal signals that may vary independently from each other. In other words, the tip signal Lx may be essentially independent of the tilt angle Ay and/or essentially independent of the second relative displacement DY; and the tilt signal Ly may be essentially independent of the tip angle Ax and/or essentially independent of the first relative displacement DX. This makes it easier to use the tip signal Lx to independently control or correct the tip angle Ax and/or first relative displacement DX without affecting the tilt angle Ay and/or second relative displacement DY; and vice versa makes it easier to use the tilt signal Ly to independently control or correct the tilt angle Ay and/or second relative displacement DY without affecting the tip angle Ax and/or first relative displacement DX. Most preferably, the tip signal Lx and the tilt signal Ly are transmitted via separate waveguides 41,42 of the second set of waveguides 40. For example, the tip signal Lx is transmitted via a first waveguide 41 of the second set of waveguides 40, and the tilt signal Ly is transmitted via a second waveguide 42 of the second set of waveguides 40, separate from the tip signal Lx.

In some embodiments, the first photonic circuit 30 is configured to utilize only a portion of the photons from the incoming optical beam "Lin" for generating the tip signal Lx and the tilt signal Ly, while directing the remaining photons to generate one or more other optical signals for additional functionalities. In other or further embodiments, the first photonic circuit 30 is programmable, e.g. to adjust how the first set of optical signals are combined to generate the second set of optical signals, thereby allowing dynamic optimization for different operating conditions or requirements.

In some embodiments, the incoming optical beam "Lin" is (at least part of) an optical communication beam used for receiving data. In other or further embodiments, the first photonic circuit 30 is configured to generate the second set of optical signals L2 further comprising an optical data reception signal Lr indicative of the data being received via the optical communication beam. Preferably, the optical data reception signal Lr is transmitted via a third waveguide 43 of the second set of waveguides 40, separate from the tip signal Lx and separate from the tilt signal Ly.

As illustrated in the perspective view of the optical coupling surface 10 in FIG 1B, the tip angle Ax and the tilt angle Ay can be measured as the projected direction of the incoming optical beam "Lin" onto respective planes that are perpendicular to the optical coupling surface 10 and extending respectively along the first direction X, and along the second direction Y of the optical coupling surface 10, transverse or perpendicular to the first direction X. In a preferred embodiment, as shown, the tip angle Ax and/or tilt angle Ay are measured as the angle with respect to the normal vector N0 of the optical coupling surface 10, i.e. a vector that is perpendicular to the optical coupling surface 10. Typically, the normal vector N0 may represent an optimal angle of incidence for the incoming optical beam "Lin", e.g. capture the most amount of light. Alternatively, the optimal angle of incidence may deviate from the normal vector N0. In this case, the tip signal Lx and/or tilt signal Ly may be measured with respect to any (predetermined) optimal angle of incidence.

As illustrated in the top view of the optical coupling surface 10 in FIG 1C, the first relative displacement DX and the second relative displacement DY of the light spot cast by the incoming optical beam "Lin" onto the optical coupling surface 10 can be measured along the optical coupling surface 10 in the first direction X and (perpendicular) second direction Y, respectively. In a preferred embodiment, as shown, the respective relative displacements DX and/or DY are measured with respect to a center position Cxy, which is physically centered on the optical coupling surface 10. This center position Cxy may represent an optimal position of the light spot on the optical coupling surface 10, e.g. capture the most amount of light. Alternatively, the optimal measurement position may deviate from the center position Cxy. In this case, the first relative displacement DX and/or second relative displacement DY may be measured with respect to this other optimal measurement position.

In some embodiments, the first photonic circuit 30 is configured to minimize an optical intensity of the tip signal Lx when the tip angle Ax is zero and/or when the first relative displacement DX is zero. In other or further embodiments, the first photonic circuit 30 is configured to minimize an optical intensity of the tilt signal Ly when the tilt angle Ay is zero and/or when the second relative displacement DY is zero. In other or further embodiments, the first photonic circuit 30 is configured to maximize an optical intensity of the optical data reception signal Lr when the tip angle Ax is zero and the tilt angle Ay is zero and/or when the first relative displacement DX is zero and the second relative displacement DY is zero.

Preferably, the first photonic circuit 30 is designed such that when the incoming optical beam "Lin" is received at normal incidence (along the normal vector N0) and/or in the center Cxy of the optical coupling surface 10 most (e.g. >_50%, ≥80%, or ≥90%, or essentially all, optical energy is routed into the optical data reception signal Lr. Alternatively, or in addition, the first photonic circuit 30 may also be configured to minimize the tip signal Lx and/or minimize the tilt signal Ly and/or maximize the optical data reception signal Lr at any other preferred angle of incidence of the incoming optical beam "Lin" and/or at any other preferred position of the light spot on the optical coupling surface 10.

In some embodiments, the optimal angle of incidence of the incoming optical beam "Lin" and/or optimal position of the light spot on the optical coupling surface 10 at which the tip signal Lx and/or tilt signal Ly are to be minimized (e.g. essentially zero), is controllable. For example, this may be controlled by controlling a relative phase delay between the respective waveguides. This may be used to correct for errors in the mechanical assembly or deformations of the sensor device. Alternatively, or in addition, also static phase delays may be applied in any one or more of the first set of waveguides 20. Furthermore, while FIGs 1B and 1C show the first direction X and the second direction Y being preferably along respective symmetry axes of the optical coupling surface 10, in other or further embodiments, the measurement directions X,Y may be rotated with respect to the sensor symmetry directions, e.g. by mixing signals of different directions. Also, this rotation of the measurement axes may be controllable, e.g. by controlling the mixing and/or relative delays for different directions. For example, this may be useful when the axis of motion of an actuator (e.g. mirror, translation stage) and/or the directions along which the actuator controls the direction and/or position of the incoming optical beam "Lin" on the optical coupling surface 10 is not aligned with the symmetries of the optical coupling surface 10.

In some embodiments, the first photonic circuit 30 comprises an optical interferometric arrangement configured to combine the first set of optical signals L1 to generate the second set of optical signals L2. For example, the optical interferometric arrangement comprises a Mach-Zender interferometer mesh. In other or further embodiments, the optical interferometric arrangement includes a set of optical combiners 31,32. The optical combiners may act as optical mixers configured to mix respective optical input signals received via two or more optical input waveguides, and output one or more (different) signals that may depend on the mixing, e.g. depending on the (relative) amplitude and/or phase of each of the respective optical input signals. Preferably, the optical combiners 31,32 comprise multimode interferometers (MMIs). Also other or further optical components, such as directional couplers and/or beam splitters, may be used to combine, split, and/or mix optical signals. Preferably, the first photonic circuit 30 is configured to combine the first set of optical signals L1 such that the tip signal Lx and the tilt signal Ly (as well as the optical data reception signal Lr, if present) are generated by constructive and destructive interference of the first set of optical signals L1.

In some embodiments, the first photonic circuit 30 is configured such that the tip signal Lx and the tilt signal Ly are generated without the use of active phase shifters, by appropriately designing the optical path lengths of the waveguides. In principle, a desired phase or phase delay can be set by carefully determining and/or manufacturing the respective length of respective waveguides in the manufacturing process of the photonic circuit. So, in this case, no further optical elements may be needed to control the phase. Alternatively, or in addition, one or more static and/or controllable optical elements can be added to a respective waveguide to set, correct, tune, and/or control a respective phase delay. This may alleviate manufacturing tolerances. These elements may include fixed optical path length differences, geometric phase shifters utilizing polarization manipulation, or any combination of the aforementioned controllable elements.

In other or further embodiments the optical interferometric arrangement comprises optical elements configured to control the (relative) phase of the optical signals. For example, by setting the relative phase between two signals having the same in-phase component to zero, that component may be added interferometrically or isolated, e.g. while removing counter-phase components in the two signals. For example, by setting the relative phase between two signals having the same in-phase component to 180° (pi radians), that component may be removed, e.g. while retaining possible counter-phase components in the two signals. For example, by setting the relative phase between two signals having the same component, but in counter-phase, to zero, that component may be removed, e.g. while retaining in-phase components in the two signals. For example, by setting the relative phase between two signals having the same component, but in counter-phase, to 180° (pi radians), that component may be added or isolated, e.g. while removing in-phase components in the two signals.

In general, desired phase delays within respective waveguides and/or between different waveguides of the photonic circuits described herein can be set and/or controlled by static and/or controllable optical elements. Preferably, the photonic circuits described herein comprise electrically controllable elements such as electro-optic modulators, thermo-optic phase shifters, and/or carrier injection/depletion devices in semiconductors. Alternatively, or in addition, the relative phase between two or more optical input signals is set by a relative (optical) length of the respective input waveguides, e.g. respective length from the optical coupling surface 10.

In some embodiments (not shown), the optical interferometric arrangement comprises optical elements for controlling the (relative) amplitude of optical signals. For example, optical attenuators (VOA), optical amplifiers, or Mach-Zehnder modulators can be employed to selectively adjust the intensity of the optical signals. The interferometric arrangement may incorporate both phase and amplitude control elements to provide enhanced flexibility in manipulating the optical signals. In one embodiment, the optical elements are integrated into the photonic circuit to allow fine-tuned control over the signal processing. In another embodiment, external components can be used to provide additional modulation and control. Further embodiments may combine different types of phase and amplitude control elements to optimize the performance of the optical system for specific applications.

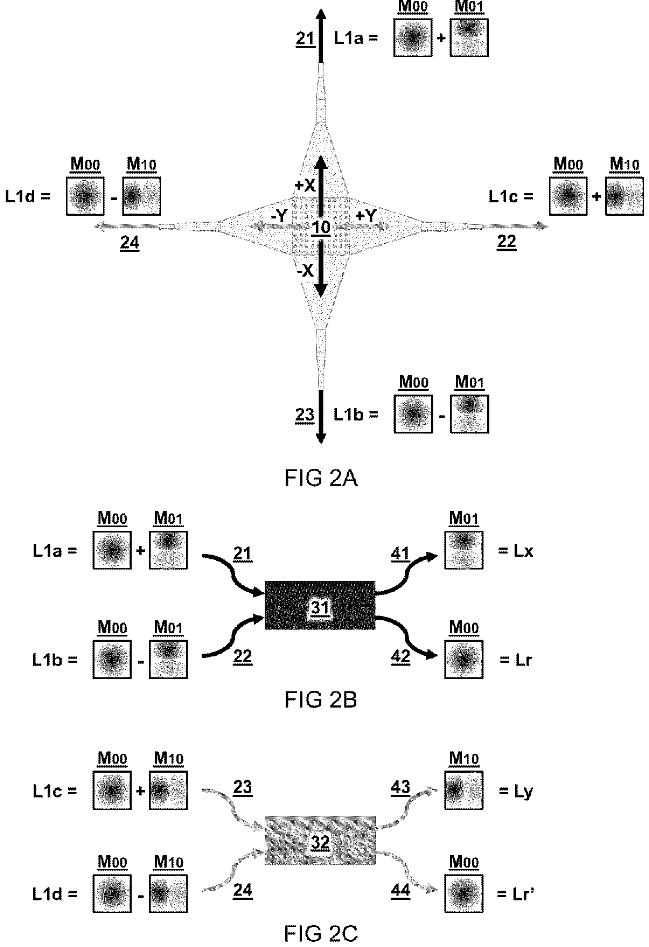

FIG 2A illustrates a 2D star coupler comprising an optical coupling surface 10. This may be the same, or similar, optical coupling surface 10 as shown in FIG 1A. So, aspects described with reference to FIG 1A may be similarly applicable to FIG 2A, and vice versa. In one embodiment, e.g. as shown, the optical coupling surface 10 is configured to output a first set of optical signals L1a, L1b, L1c, and L1d on each of four different sides via a respective set of optical waveguides 21, 22, 23, and 24. The optical coupling surface 10 is shown as a square array of smaller elements, representing a grating or other photonic structure capable of coupling with the incoming light beam. Also any other type of coupling structure may be used. In one embodiment, e.g. as shown, the incoming light is distributed into four waveguides, each corresponding to a different direction (+X, -X, +Y, -Y).

Without being bound by theory, each output signal (L1a, L1b, L1c, L1d) may be thought of as being composed of different combinations of optical modes or components which may depend on the angle and/or position that the incoming optical beam "Lin" impinges the optical coupling surface 10. In the embodiment shown, L1a may correspond to a superposition of the formM00 + M01, L1b may correspond to a superposition of the formM00 - M01, L1c may correspond to a superposition of the formM00 + M10, and L1d may correspond to a superposition of the formM00 - M10, where M00, M01, and M10 represent different optical modes or components of the incoming light. It will be understood that the signals L1a, L1b, etc., as described in this and other figures may, in principle, be considered to be composed of an infinite series of modes (M11, M20, M21, ...), whereas the combination of the modes M00, M01, M10 are the ones most relevant for the purposes as described herein. So, for preferred embodiments involving tip/tilt, the measurements may be particularly focused on these modes while other modes may be ignored, e.g. lost in scattering.

It is noted that in the design, as shown in FIG 2A, the light being passed into respective waveguides may depend on the polarization of the incoming optical beam "Lin". To alleviate potential polarization dependence, the incoming optical beam may optionally be passed via depolarizer optics before entering the optical coupling surface 10. For example, a single data stream may be encoded on the beam. Alternatively, or in addition, polarization optics may be used to optimize the polarization to split equally between vertical and horizontal. For example, two data streams can be encoded independently on two orthogonal polarizations, and the polarization optics may be configured such that vertical and horizontal polarization after the polarization optics carry only one of the two independent data streams.

FIG 2B illustrates how the optical signals L1a and L1b may be combined using an optical combiner 31 to generate new optical signals Lx and Lr. L1a (M00 + M01) from waveguide 21 and L1b (M00 - M01) from waveguide 22 are input into the optical combiner 31. The combiner 31 produces two output signals: Lx, which may correspond to M01 and is transmitted via waveguide 41, and Lr, which may correspond to M00 and is transmitted via waveguide 42. This combination effectively isolates the M01 mode, representing the x-axis displacement or angle, and the M00 mode, representing the overall intensity or optical data reception signal.

FIG 2C shows a similar process for the Y-axis signals using optical combiner 32. L1c (M00 + M10) from waveguide 23 and L1d (M00 - M10) from waveguide 24 are input into the optical combiner 32. The combiner 32 produces two output signals: Ly, which is equal to M10 and is transmitted via waveguide 43, and Lr', which is equal to M00 and is transmitted via waveguide 44. This combination isolates the M10 mode, representing the y-axis displacement or angle, and provides a second instance of the M00 mode, which may serve as another optical data reception signal (or serve any other function).

In some embodiments, the optical combiners 31 and 32 may implement a form of interferometric combination. By adding and subtracting the input signals interferometrically, they can isolate specific components. For the X-axis (FIG 2B), Lx may correspond to a superposition of the form (M00 + M01) - (M00 - M01), which may simplify to 2M01, while Lr may correspond to a superposition of the form (M00 + M01) + (M00 - M01), which may simplify to 2M00. For the Y-axis (FIG 2C), Ly may correspond to a superposition of the form (M00 + M10) - (M00 - M10), which may simplify to 2M10, while Lr' may correspond to a superposition of the form (M00 + M10) + (M00 - M10), which may simplify to 2M00. This process may effectively separate the directional information (Lx and Ly) from the intensity/data information (Ld and Lr'). The M01 and M10 modes may correspond to the tip and tilt of the incoming beam, while M00 represents the overall intensity or data content of the signal.

In some embodiments, the optical combiners 31 and 32 are implemented using multimode interferometers (MMIs), directional couplers, or other photonic structures capable of performing the required signal mixing and separation. The resulting signals (Lx, Ly, Lr, and Lr') can then be used for various purposes, such as beam steering, signal tracking, or data extraction, depending on the specific application of the optical system.

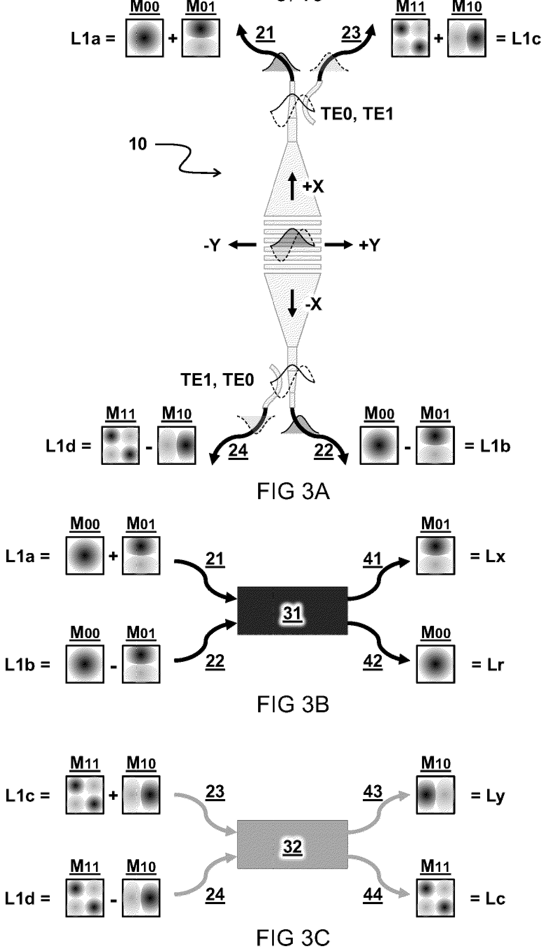

FIG 3A illustrates an alternative embodiment of the optical coupling surface 10, implemented as a 1D grating coupler. This configuration comprises two mode demultiplexers positioned on opposite sides of the optical coupling surface 10, outputting a first set of optical signals L1a, L1b, L1c, L1d via a respective set of optical waveguides 21, 22, 23, 24. FIGs 3B and 3C illustrate the process of mixing these optical signals to generate a second set of optical signals Lx, Lr, Ly, and Lc.

In some embodiments, e.g. as shown, a respective set of at least two waveguides (one set on each side of two opposing sides of the optical coupling surface 10) is configured as a mode demultiplexer such that a fundamental mode (TE0) is funneled into one waveguide and a higher-order mode (TE1) is funneled into an adjacent waveguide. For example, the fundamental mode (TE0) may be funneled predominantly into a waveguide that is centrally disposed with respect to the optical coupling surface 10, and the higher-order mode (TE1) is funneled into an adjacent waveguide that is arranged off-center with respect to the optical coupling surface 10.

The 1D grating coupler design of FIG 3A may offer an advantageous approach to beam position and angle sensing. By utilizing both fundamental and higher-order modes, and through the asymmetric arrangement of waveguides, it may achieve sensitivity along both X and Y axes despite its 1D grating structure. This design may be particularly useful for determining the beam's properties in two dimensions while offering advantages in terms of fabrication and/or footprint compared to a 2D grating coupler.

In the embodiment shown, the optical signals are composed as follows: L1a may correspond to a superposition of the formM00 + M01, L1b may correspond to a superposition of the formM00 - M01, L1c may correspond to a superposition of the formM11 + M10, and L1d may correspond to a superposition of the formM11 - M10. Here, M00, M01, M10, and M11 represent different optical modes or components of the incoming light, with M11 being an additional mode that may not be present or relevant in the 2D coupler configuration of FIGs 2A-2C. FIG 3B shows the combination of L1a and L1b using optical combiner 31. This may generate the tip signal Lx (corresponding to M01) and the optical data reception signal Lr (corresponding to M00). These signals are derived from the waveguides carrying the fundamental mode (TE0). FIG 3C shows the combination of L1c and L1d using an optical combiner 32. The outputs are Ly (corresponding to M10) and Lc (corresponding to M11). These signals are derived from the waveguides carrying the higher-order mode (TE1). In this configuration, Ly represents the tilt signal, while Lc may correspond to a different aspect of the incoming beam, such as its mode composition.

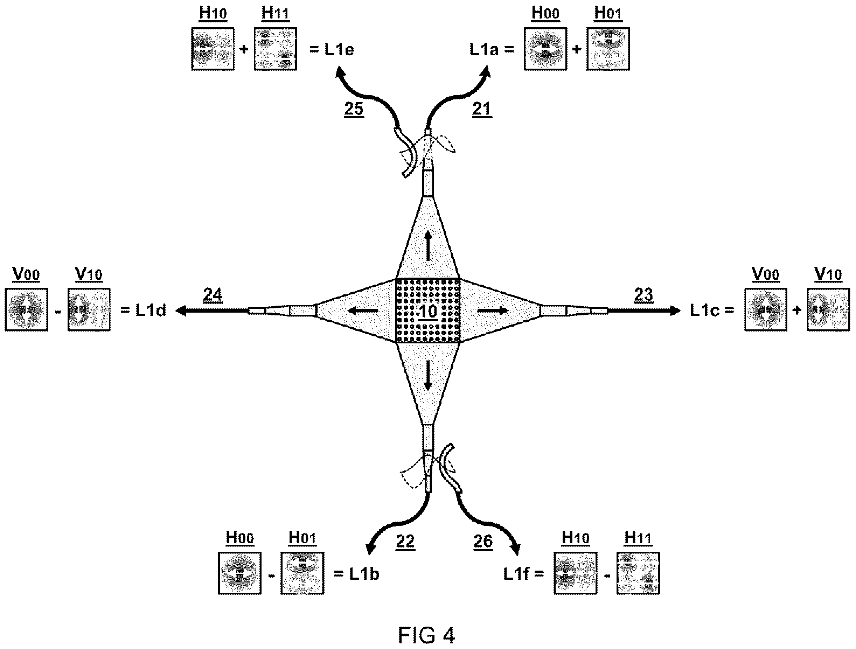

FIG 4 illustrates a 2D star-coupler with mode demultiplexers, which may be considered to combine aspects of the 2D star coupler from FIG 2A and the mode demultiplexing concept from FIG 3A. In the embodiment shown, the configuration outputs six different signals on four different sides of the optical coupling surface 10. This may allow extracting further information from the incoming optical beam "Lin", in particular allowing for the distinction of different polarizations (indicated by H and V).

In the embodiment shown, the waveguides on the top and bottom sides of the optical coupling surface handle the horizontally polarized components. Waveguides 21 and 25 output L1a (H00 + H01) and L1e (H10 + H11) respectively, while waveguides 22 and 26 output L1b (H00 - H01) and L1f (H10 - H11) respectively. The waveguides on the left and right sides handle the vertically polarized components, with waveguides 23 and 24 outputting L1c (V00 + V10) and L1d (V00 - V10) respectively.

As will be understood, the signals from these waveguides may be combined using optical combiners or interferometric arrangements to isolate each component of interest. For the horizontally polarized light, L1a and L1b may be combined to isolate H00 (representing the intensity or optical data reception signal for horizontal polarization) and H01 (representing the x-axis displacement or angle for horizontal polarization). Similarly, L1e and L1f may be combined to isolate H10 and H11, providing additional information about the horizontally polarized component. For the vertically polarized light, L1c and L1d may be combined to isolate V00 (intensity or data for vertical polarization) and V10 (y-axis displacement or angle for vertical polarization). Optionally, these signals may be further combined, e.g. to reduce or remove polarization sensitivity. For example, similar components H00 and V00 may be optically combined (if they are coherent), and/or both measured, to yield a combined signal representing the common or data component. Alternatively, or in addition, the components H00 and V00 may be split to extract separate data signals, e.g. in a dual polarization data beam. Similarly, the components H01 and V01 may be combined to yield tip angle Ax and/or first relative displacement DX; and the components H10 and V10 may be combined to yield the tilt angle Ay and/or second relative displacement DY. It can also be envisaged to use two polarizations to track two independent beams with orthogonal polarizations.

In a preferred embodiment, e.g. as illustrated in any of FIGs 1-4, the optical coupling surface 10 comprises a single optical coupler with multiple outputs corresponding to the first set of waveguides 20, configured to couple the incoming optical beam into the first set of waveguides 20. In principle, three waveguides on each of the three sides of a triangular optical coupling surface 10 (not shown) may be sufficient to determine the tip and tilt angles by suitable combinations of the mixed signals. More preferably, at least four waveguides are provided as shown. Also more than four waveguides may be used, e.g. as shown in FIG 4.

Preferably, different waveguides in the first set of waveguides 20 are connected at different locations around the optical coupling surface 10 to collect optical signals from said different locations. In one embodiment, e.g. as shown in FIG 2A, the four different waveguides 21,22,23,24 are arranged on four different sides of the optical coupling surface 10, which is preferably square-shaped. In another or further embodiment, e.g. as shown in FIG 3A the four different waveguides 21,22,23,24 are arranged on two opposite sides of the optical coupling surface 10, which may be square-shaped or rectangular. In some embodiments, e.g. as shown in FIGs 3A and 4, the first set of waveguides 20 is configured to receive different spatial modes of the incoming optical beam via mode demultiplexing.

In some embodiments, e.g. as shown in any of FIGs 2B, 2C, 3B, 3C, the first photonic circuit 30 comprises a set of optical combiners 31,32, each configured to combine a respective pair of signals L1a,L1b; L1c,L1d from opposite sides of the optical coupling surface 10 to generate the tip signal Lx and the tilt signal Ly separately. In one embodiment, e.g. as shown in FIGs 2A and 4, the opposing sides of the optical coupling surface 10 along the first direction X are used to generate the tip signal Lx; and the opposing sides of the optical coupling surface 10 along the second direction Y are used to generate the tilt signal Ly. In another or further embodiment, e.g. as shown in FIGs 3A and 4, respective waveguides on opposing sides of the optical coupling surface 10 along the same direction, e.g. X, are used to generate the tip signal Lx and the tilt signal Ly.

FIG 5 illustrates an alternative embodiment of the optical coupling surface 10, implemented as a segmented structure comprising segments 10a, 10b, 10c, and 10d. This segmented design offers a different approach to capturing and processing the incoming optical beam "Lin". On the one hand, the segmented design of the couplers may be relatively simple. On the other hand, the single coupler surface as described, e.g., with reference to any of FIGs 1-4 may be relatively more efficient. Also, the photonic circuit of the single surface coupler may be less complicated compared to the photonic circuit of the segmented surface coupler.

In this configuration, each segment of the optical coupling surface is designed to funnel light into a corresponding waveguide. Segments 10a and 10b are connected to waveguides 21 and 22 respectively at the top of the structure, while segments 10c and 10d are connected to waveguides 23 and 24 at the bottom. This arrangement allows for the separation of the incoming beam into four distinct signals, each potentially carrying information about different spatial regions of the beam.

The optical signals output by each waveguide may be composed of different combinations of optical components. As shown in the figure, L1a may correspond to a superposition of the form M00 - M10 + M01, L1b may correspond to a superposition of the form M00 + M10 + M01, L1c may correspond to a superposition of the form M00 - M10 - M01, and L1d may correspond to a superposition of the form M00 + M10 - M01. Here, M00, M10, and M01 may represent different optical modes or components of the incoming light, similar to previous configurations but with potentially different physical interpretations due to the segmented structure.

To isolate the individual components and extract useful information about the incoming beam's properties, these signals can be combined using optical combiners or interferometric arrangements. The process of isolating signals may be as follows. To isolate M00 (representing the overall intensity or optical data reception signal), all four signals may be added interferometrically (L1a + L1b + L1c + L1d) / 4 = M00. To isolate M10 (potentially representing vertical displacement or tilt), the top signals may be subtracted from the bottom signals: ((L1b - L1a) + (L1d - L1c)) / 4 = M10. To isolate M01 (potentially representing horizontal displacement or tip), the right signals may be subtracted interferometrically from the left signals: ((L1a + L1b) - (Lie + L1d)) / 4 = M01.

Compared to a traditional quadrant detector, the segmented design shown in FIG 5 offers significant advantages due to its interferometric combination of light before measurement. This approach preserves and exploits the phase information carried by the incoming optical beam, enabling more accurate measurements of beam direction (tip and tilt) and additional filtering options. Unlike electrical signals that accumulate noise easily, optical pre-processing maintains signal quality, particularly for linear operations. The design extracts both amplitude and phase information, allowing the detection of mode composition, wavefront shape, and simultaneous measurement of beam position and angle. By using integrated photonic circuits rather than traditional bulk or fiber optics, this approach may also provide improvements in signal quality, mechanical stability, size, weight, packaging, and/or potentially power consumption and cost.

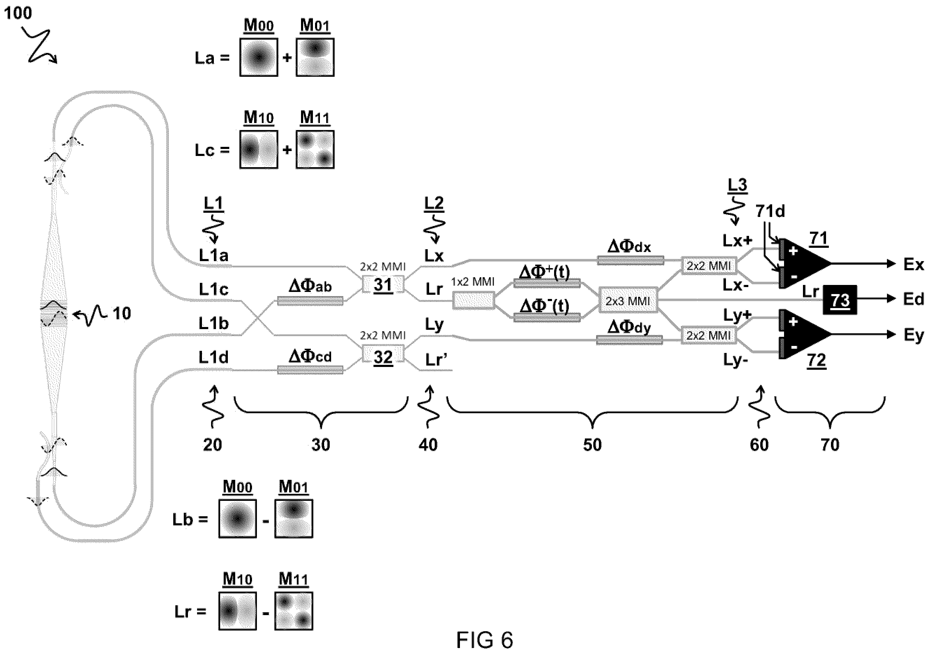

FIG 6 illustrates further aspects of a system for processing an incoming optical beam, in particular for generating a set of electrical signals Ex, Ey, Ed which may be indicative of the tip, tilt, and data contents of the optical beam, respectively. In the embodiment shown, the optical coupling surface 10 is similar as was shown and described with reference to FIG 2A. Of course, it will be understood that also any of the other designs could be used. In addition to the configuration that was discussed with reference to FIGs 2B and 2C, the present design illustrates a set of active phase shifters ΔΦab and ΔΦcd which may be used to actively set and/or control the relative phase between the signals L1a and L1b, and between the signals L1c and L1d, respectively. The phase shifters may be controlled, e.g. electrically, to output the respective signals Lx, Lr, Ly, Lr' from the first photonic circuit 30. Optionally, a probe that extracts a fraction of the optical signals from the waveguides can also be added to allow/improve the control of the phase shifters (after detection and processing). The embodiment also shows phase shifters ΔΦdx and ΔΦdy, which may control or set the relative phase between the signals Lx and Lr; and between the signals Ly and Lr, respectively

In some embodiments, e.g. as shown, the system 100 comprises a set of photodetectors 70 configured to receive optical output signals from the first photonic circuit 30, and/or from a further photonic circuit 50, for each of the tip signal Lx and tilt signal Ly; and to generate a set of electrical signals Ex,Ey indicative of a magnitude and/or direction of the tip angle Ax and/or first relative displacement DX, and the tilt angle Ay and/or second relative displacement DY.

For some applications, it may be desired to disambiguate positive or negative tip/tilt angles/displacement. This may be difficult when directly measuring the intensity of the second set of optical signals L2. For example, this information may be contained in a relative phase of the tip signal Lx and/or tilt signal Ly (e.g. relative to a reference signal), which may be difficult to measure directly, e.g. with a photodiode. In this case, it may be advantageous to combine the tip signal Lx and/or tilt signal Ly with an additional signal such that the intensity of the resulting signal is also sensitive to the relative phase. In other or further embodiments, the tip signal Lx and/or tilt signal Ly may have a relatively weak intensity and/or low signal to noise. Also in this case, it may be advantageous to boost the signal strength by combining with a stronger signal.

In some embodiments, the system comprises a second photonic circuit 50 configured to receive at least one of the tip signal Lx and the tilt signal Ly and to process it interferometrically with a reference optical signal to generate a third set of optical signals L3. In one embodiment, the third set of optical signals L3 comprises a first subset of signals configured to measure whether the direction of the tip angle Ax and/or first relative displacement DX is positive or negative with respect to a reference direction N0 and/or reference position Cxy. In another or further embodiment, the third set of optical signals L3 comprises a second subset of signals configured to measure whether the tilt angle Ay and/or second relative displacement DY is positive or negative with respect to the reference direction N0 and/or reference position Cxy. Preferably, the first photonic circuit 30 and the second photonic circuit 50 are integrated on a single photonic chip. Alternatively, each of the first photonic circuit 30 and second photonic circuit 50 may be formed on a separate photonic chip, interconnected by waveguides.

In some embodiments, the second photonic circuit 50 comprises a set of optical combiners configured to combine the tip signal Lx and/or tilt signal Ly with the reference optical signal Lo,Ld in an interferometric arrangement. For example, the second photonic circuit 50 is configured to perform interferometric measurements selected from intradyne detection, homodyne detection, or heterodyne detection on the tip signal Lx and/or tilt signal Ly. Preferably, the interferometric processing generates, for each of the tip signal Lx and the tilt signal Ly, at least two separate optical output signals (Lx+,Lx-) and (Ly+,Ly-) indicative of positive and negative directions of the tip angle and tilt angle, respectively. In principle, also a single optical output signal may be used, e.g. a signal representing a static bias plus or minus a variable signal depending on the plus-minus direction. However, using two signals may also improve signal-to-noise ratio.

In one embodiment, e.g. as shown in FIG 6 a single balanced photodetector pair (71 or 72) may be used, while performing an amplitude modulation on Lr using the second photonic circuit 50. In this case, the phases of Lx and Ly may be aligned to maximize the contrast of the interferometric fringes. In another or further embodiment, phase modulation of Lr may be performed, and only one pair of detectors (for Lx, same for Ly) may be used. In this case, the (average) phase of Lr and Lx (same for Ly) may still need to be aligned. When using two pairs of PD (for Lx , and same for Ly), both quadrature of the field may be measured and the phase between Lx and Lr need not be adjusted. However, this may come with an overhead in the electronics and complexity signal processing. Furthermore, shallow amplitude modulation is usually faster and may require less electrical power than shallow phase modulation, and is therefore preferable.

In one embodiment, the first subset of signals comprises a first tip signal Lx+ and second tip signal Lx-, wherein a relative magnitude of intensity between the first tip signal Lx+ and second tip signal Lx- indicates whether the direction of the tip angle Ax and/or first relative displacement DX is positive or negative with respect to a reference direction N0 and/or reference position Cxy. In another or further embodiment, the second subset of signals Ly+,Ly- comprises a first tilt signal Ly+ and second tilt signal Ly-, wherein a relative magnitude of intensity between the first tilt signal Ly+ and second tilt signal Ly- indicates whether the direction of the tilt signal Ly and/or second relative displacement DY is positive or negative with respect to a reference direction N0 and/or reference position Cxy. Also more or fewer signals may be generated by the second photonic circuit 50 in either one or both of the first subset of signals and the second subset of signals.

In one embodiment, the system 100 is configured to have the first subset of signals Lx+,Lx- measured by a first balanced photodiode 71 for generating a first electrical signal Ex indicative of the tip angle Ax and/or first relative displacement DX. In another or further embodiment, the system 100 is configured to have the second subset of signals Ly+,Ly-measured by a second balanced photodiode 72 for generating a second electrical signal Ey indicative of the tilt angle Ay and/or second relative displacement DY.

Preferably, the photonic integrated circuit as described herein is controlled by an electronic circuit, to transform the optical signals into electrical signals that are proportional to the angle of incidence of the optical beam in tip and tilt direction. This may be used as input to at least one other device (actuator, processing circuit, algorithm, ...) which may exploit this input as feedback to improve a quality of the alignment.

In some embodiments, the first electrical signal Ex, e.g. voltage and/or current (direction), is proportional with the tip angle Ax and/or first relative displacement DX, at least for small angles (for example, as long as the beam is completely received by the optical coupling surface 10). For example, the first electrical signal Ex is positive when the tip angle Ax and/or first relative displacement DX is positive with respect to the reference direction N0 and/or reference position Cxy. In other or further embodiments, the second electrical signal Ey, e.g. voltage and/or current (direction), is proportional with the tilt angle Ay and/or second relative displacement DY. For example, the second electrical signal Ey is positive when the tilt angle Ay and/or second relative displacement DY is positive with respect to the reference direction N0 and/or reference position Cxy.

In the embodiment shown, light from the optical data reception signal Lr is split by a 1×2 MMI into two parts which are respectively guided through a pair of active phase shifters AΦ+(t) and ΔΦ-(t). The light is then recombined in a 2×3 MMI with three outputs. A first output is mixed in a 2×2 MMI with the tip signal Lx, yielding the first subset of signals Lx+,Lx-. A second output is mixed in a 2×2 MMI with the tilt signal Ly, yielding the second subset of signals Ly+,Ly-. The active phase shifters may be used to modulate the optical data reception signal Lr (slow modulation compared to potential data modulation), which in turn may cause (intensity) modulation of one or more of the third set of optical signals L3. For example, the active phase shifters may be controlled electronically to add or subtract a periodic phase shift to either signal. In some embodiments, modulation in the optical domain may be used in the detection process to improve signal-to-noise, e.g. by lock-in amplification. Of course, also other ways of modulating the signals may be envisaged. The modulation may also be omitted. For example, 1×2 MMI and 2×3 MMI may be replaced by a single 1×3 MMI. Alternative to using the optical data reception signal Lr also other modulated or unmodulated reference signals may be used for mixing with the tip signal Lx and/or tilt signal Ly

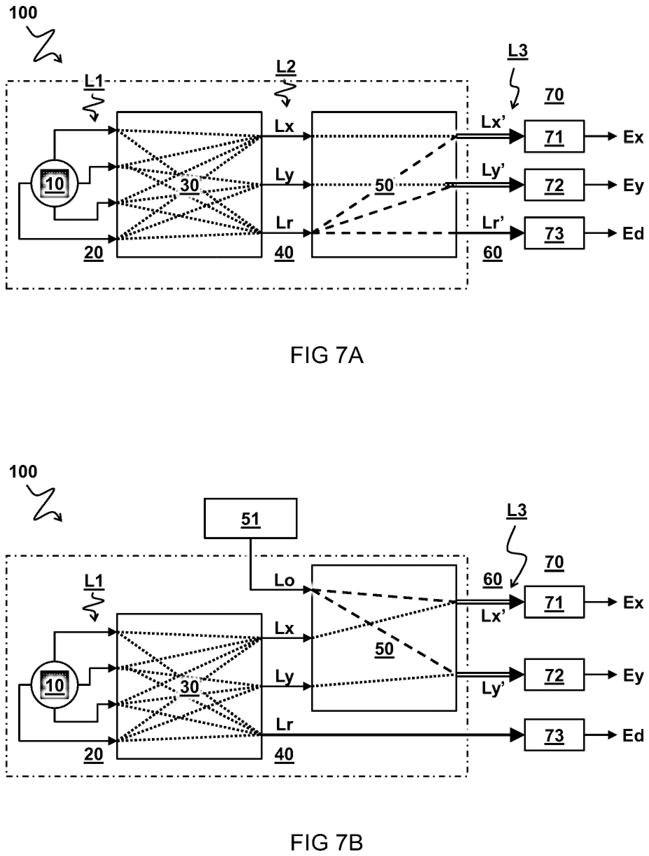

FIG 7A illustrates a generalized representation of the system 100 as was described with reference to FIG 6. In general, at least one optical coupling surface 10 is configured to receive an incoming optical beam (not shown). The first set of optical signals L1 resulting from the incoming optical beam is funneled into a first set of waveguides 20. The first set of waveguides 20 feeds into a first photonic circuit 30, which combines/mixes the first set of optical signals L1 to yield a second set of optical signals L2 that is output via a second set of waveguides 40. In principle, this light could be measured directly. For example, even without knowing the plus-minus direction of the light, this direction may be inferred by observing the measured signal increasing or decreasing as a function of a controlled change of the beam direction. Preferably though, the system 100 comprises a second photonic circuit 50 which receives the second set of optical signals L2, and outputs a third set of optical signals L3. The third set of optical signals L3 may include respective subsets of signals Lx' and Ly' which may be measured by a set of photodetectors 70 to output a set of electrical signals Ex, Ey that may be used to (unambiguously) determine the tip angle and tilt angle of the incoming optical beam and/or directly determine the respective DX,DY offsets of the incoming optical beam on the optical coupling surface 10.

FIG 7B illustrates a similar system 100 as FIG 7A, except the reference optical signal, to be combined with the tip signal Lx and/or tilt signal Ly in the second photonic circuit 50, is derived from a local oscillator signal Lo, which may be externally generated, e.g. by a light source 51. In some embodiments, the light source 51 may be integrated as part of the system 100, or even integrated as part of the second photonic circuit 50. As mentioned before, the first photonic circuit 30 and second photonic circuit 50 may also be integrated, e.g. as part of the same optical chip.

Mixing with an externally generated signal according to the embodiment of FIG 7B, may also be used to boost a signal strength. This may also improve the field of view, e.g. range over which the Ex and Ey are proportional to DX or DY (and Ax, Ay) Alternatively, by deriving the reference optical signal from a part of the incoming optical beam "Lin" according to FIG 7A may have various advantages, e.g. not requiring any externally generated optical signal. In one embodiment, the reference optical signal is derived from one or more of the first set of optical signals L1 received from the optical coupling surface 10. In another or further embodiment, the reference optical signal is derived from one or more of the second set of optical signals L2, e.g. derived from a combination of multiple optical signals in the first set of optical signals L1. For example, the optical data reception signal Lr and/or a common signal in the incoming optical beam is used as the reference optical signal.

In some embodiments (not shown), the electrical signals Ex, Ex are used to (directly or indirectly) control one or more actuators configured to adjust the angular direction Ax,Ay and/or position DX,DY of the incoming optical beam "Lin" on the optical coupling surface 10. Preferably, the electrical signals Ex,Ey may be directly used to control the one or more actuators. In one embodiment, the system 100 comprises at least one adjustable mirror or other optical redirecting element between an origin of the incoming optical beam "Lin" and the optical coupling surface 10. For example, the at least one actuator is configured to adjust an angle and/or position of the at least one optical redirecting element. In some embodiments, one actuator may be used to control both the tip and tilt angles. In other or further embodiments, a first actuator is used to control the tip angle Ax and/or first relative displacement DX based on the first electrical signal Ex; and a second actuator is used to control the tilt angle Ay and/or second relative displacement DY based on the second electrical signal Ey.

In general, FIGs 2-5 illustrate various arrangements of the optical coupling surface 10, the first set of waveguides 20, and optical elements 31,32 of the first photonic circuit 30. FIGs 6 and 7 illustrate further aspects of respective systems 100 for processing optical signals (Lx, Ly, Lr) from an incoming optical beam, in particular for generating a set of electrical signals Ex,Ey,Er indicative of the tip, tilt, and data contents of the incoming optical beam. It will be understood that aspects described with reference to FIG 1 may be applied in the embodiments of any of FIGs 2 - 7, and vice versa. It will also be understood that while FIG 7 shows photonic circuit parts corresponding an optical coupling surface 10 similar as FIG 3A, these circuit parts may be adapted to accommodate the optical coupling surface 10 according to the embodiments of any of FIGs 2,4,5. It will also be understood that while the circuit of FIG 6 uses part of the incoming optical beam "Lin" as reference signal, similar as FIG 7B, the circuit can also be adapted to use an externally generated local oscillator signal, similar as FIG 7A. Also further optical components may be added to the system. For example, an additional filter and/or amplifier module may be inserted between the first photonic circuit 30 and the second photonic circuit 50. This may be used to (optically) boost and/or filter the second set of optical signals L2 before further processing these with the second photonic circuit 50

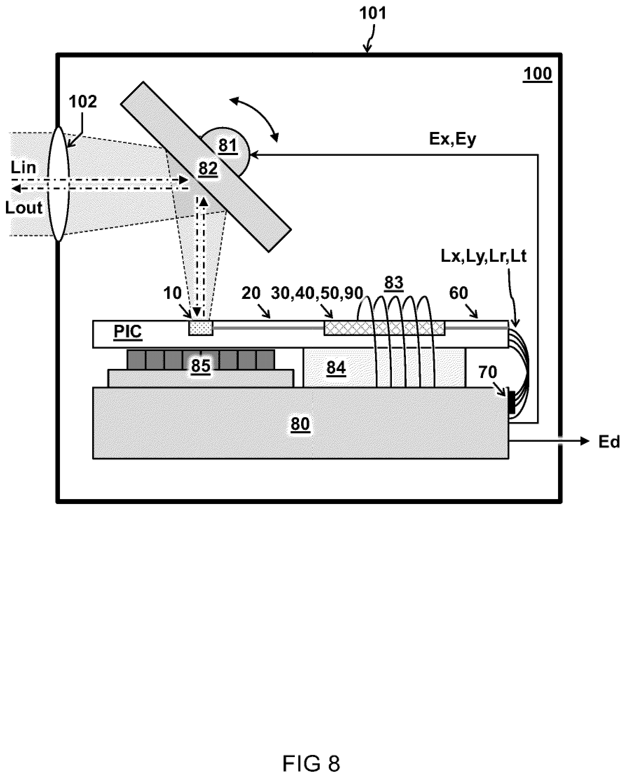

FIG 8 illustrates further aspects of a system 100 for processing, an incoming optical beam "Lin", incorporating various components described in previous figures into a more complete assembly. For example, the system 100 may be capable of receiving, processing, and/or measuring, an incoming optical beam "Lin" used for optical communication or sensing. Also other applications may be envisaged. In some embodiments, the system 100 as described herein may also be capable of processing an outgoing optical beam "Lout". For example, the optical system 100 may be capable of generating, processing, and/or emitting, an outgoing optical beam "Lout" used for optical communication or sensing.

The present figure shows the incoming and outgoing optical beams being received and transmitted from the same optical coupling surface 10, and in the same direction via the same free space optical components 102, 82. It can also be envisaged to use a different optical coupling surface and/or different free-space optical components for receiving the incoming optical beam "Lin') and emitting the outgoing optical beam "Lout". For example, dichroic and/or polarization optics may be used to split and/or combine light paths in a third photonic circuit 90 of a photonic integrated circuit (as will be described later) and/or using free-space optical components to send the outgoing optical beam "Lout" in a different direction than the incoming optical beam "Lin". In one embodiment, the optical system 100 is configured to provide a point ahead angle between the outgoing optical beam "Lout" and the incoming optical beam "Lin". For example, an additional point ahead mirror (not shown) may be used on one of optical path. This may be useful in optical communication with a relatively moving target over a larger distance, e.g. in satellite communication. Advantageously, the teachings of a tip-tilt sensor as described herein may be used to track a respective beacon of one or more targets, and the outgoing optical beam "Lout" may be emitted towards that/those target(s), optionally including a point-ahead angle depending on distance and/or relative velocity. For example, a (fine) tuning mirror that shares and/or determines the optical paths of both the incoming optical beam "Lin" and outgoing optical beam "Lout" may be controlled using an optical circuit as described herein. Also short-distance two-way optical communication (e.g. without a point ahead angle) may benefit from the present teachings.

The system 100, as shown, comprises a photonic integrated circuit (PIC) that includes the optical coupling surface 10 configured to receive the incoming optical beam "Lin" and the first set of waveguides 20 optically coupled with the optical coupling surface 10, as described previously. The first photonic circuit 30, the second photonic circuit 50, and the second set of waveguides 40 therebetween may be integrated as a single circuit outputting the processed optical signals Lx,Ly,Lr via the third set of waveguides 60. For example, these signals may be output from the PIC via optical fibers to a set of photodetectors 70, as shown; or the set of photodetectors 70 may be integrated onto the PIC; or the set of photodetectors 70 may be separate component(s). The set of photodetectors 70 may convert the optical signals into electrical signals Ex, Ey, and Er, as described herein, to represent the tip, tilt, and data content of the incoming optical beam, respectively.

In some embodiments, the system 100 comprises a controller 80 comprising electrical components. For example, the controller 80 may be implemented as a printed circuit board (PCB). In one embodiment, the controller 80 is configured to electrically control various optical components of the PIC, such as setting or controlling respective phase delays, attenuating or boosting optical signals, filtering optical signals, et cetera. Optionally, the system 100 comprises a temperature controller 84, e.g. including a cooling arrangement, to maintain temperature control of the PIC.

In other or further embodiments, the system 100 comprises or couples to at least one beam steering mirror 82 which may be controlled by at least one actuator 81. In one embodiment, e.g. as shown, the controller 80 uses the electrical signals Ex and Ey, derived from the processed optical signals Lx, Ly as described herein, to directly control different axes of the at least one actuator 81. This may allow for automatic alignment of the incoming light beam Lin onto the optical coupling surface 10, without requiring further electrical processing.

In some embodiments, the system incorporates a wide field beam detector 85 configured to measure the incoming beam Lin over a relatively large field of view compared to the optical coupling surface 10. As shown in the figure, the optical coupling surface 10 of the PIC may be relatively small and placed in front of the wide field beam detector 85. When the incoming optical beam "Lin" is properly aligned, a majority of light, or essentially all light, of the incoming optical beam "Lin" may be coupled into the optical coupling surface 10. In one embodiment, the wide field beam detector comprises a pixel array and can be used in addition to the PIC for aligning the beam. For example, the wide field beam detector 85 may be used for rough alignment to find and/or steer the incoming optical beam "Lin" onto the optical coupling surface 10. Once the incoming optical beam "Lin" is approximately aligned, the photonic integrated circuit, as described herein, can be used for establishing and/or maintaining fine alignment.

In some embodiments, bulk optical components may be arranged in a path of the incoming optical beam "Lin". In one embodiment, the incoming optical beam "Lin" is focused on a position of the optical coupling surface 10. For example, the incoming optical beam "Lin" may be focused by one or more lenses 102, as shown; or mirror(s). The entire assembly may be housed on a common substrate and/or arranged within an enclosure, as indicated by the outer box labeled 101 having at least one aperture for the incoming optical beam "Lin". This integrated design may allow for a compact and efficient system for processing and controlling optical beams, with applications in areas such as free-space optical communication, laser ranging, and adaptive optics. The assembly may be configured to output the optical data reception signal Ed which may be used for processing data transmitted via the incoming optical beam "Lin".

For clarity and concise description, features have been described herein as part of the same or separate embodiments; however, it will be appreciated that the scope of the invention includes embodiments having combinations of all or some of the features described. For example, while embodiments were shown for processing incoming optical beams to detect tip and tilt angles for beam alignment in optical communication systems, other or further applications may be envisaged by those skilled in the art, having the benefit of the present disclosure, for achieving similar functions and results. The various elements of the embodiments as discussed and shown offer certain advantages, such as improved signal-to-noise ratio (SNR) for low photon budgets, which may also be applicable in other fields or applications such as enhanced precision in metrology and alignments in lithography or machining applications, and improved tracking capabilities for markers in microbiology, including scattering or fluorescent markers.

Some aspects as described herein may be further enhanced through the use of multimode antennas. In the main design, described herein, the antenna carries four modes for single polarization operation and six modes for dual polarization. However, by accessing more spatial modes through specific antenna designs or by utilizing multiple antennas, several further improvements become possible. For instance, increasing the number of spatial modes allows for an expanded angular range of tip and tilt measurements. Moreover, the system could support multiple operational centers and axes to measure tip and tilt in different reference frames or for different beams simultaneously. This capability enables the system to handle complex beam configurations or multiple beams more effectively. Furthermore, accessing additional spatial modes may allow the system to correct for low-order aberrations, thereby compensating for imperfect optics or mitigating the effects of atmospheric turbulence. Therefore, the invention's flexibility in utilizing multimode antennas and processing additional spatial modes enhances its applicability in fields requiring precise optical measurements over a larger angular range or in challenging optical conditions.

Other or further aspects may accommodate multi-wavelength operation by designing the system with a sufficiently large bandwidth to support (also) a non-monochromatic and/or a non-coherent beam, in particular, to support wavelength multiplexing of data. The demultiplexer module can be integrated on the same chip as the invention or connected externally. While the tracking operation typically operates using a single wavelength, the design and data processing may in principle allow the use of the entire spectrum. To this end, wavelength filters may be added for the tip and tilt measurements; however, filtering only the reference signal for intradyne measurements may be sufficient, as the multiple multiplexed wavelengths are typically incoherent on the time scale of tip and tilt detection except for the one selected by the filter. Using a local oscillator as a reference may enable the system to support wavelength multiplexing inherently, as the wavelength filtering is achieved through interference with the local oscillator itself, making other wavelengths incoherent with the local oscillator. This capability can thus enhance the system's versatility in applications requiring multi-wavelength data reception and processing.

In some embodiments, the optical coupling surface as described herein can be used not only for coupling in an incoming optical beam but also used to couple out an outgoing optical beam, e.g. for receiving an optical data reception signal. In one embodiment, light generated by an internal light source, e.g. laser, may be coupled out through at least part of the same photonic circuit as used for receiving the incoming optical beam. In another or further embodiment, the incoming optical beam and the outgoing light beam may have different optical frequencies / wavelengths. In another or further embodiment, the photonic circuit has one or more dichroic photonic circuit elements to split and/or combine light paths for the incoming and outgoing light.

In principle, the system may also support a "two-gender" operation, a functionality that allows a satellite communication (Satcom) terminal to switch between using one wavelength-for example, "blue" light-for emission and another wavelength-such as "red" light-for reception, or vice versa. For example, this capability may be achieved by incorporating tunable wavelength filters into the system, which can suppress or reflect one wavelength while permitting the other to pass through. For example, designs based on Mach-Zehnder interferometers can be utilized to implement these tunable filters. This feature may enable flexible wavelength assignment for transmission and reception, enhancing the system's adaptability and efficiency in various communication scenarios.

Other or further adaptations, may allow for spatial, wavelength, and polarization multiplexing, enabling the same antenna-and possibly even the same processor-to track multiple targets simultaneously. For instance, when a local oscillator is used for tip and tilt measurements, each target beam could be encoded with a pilot code that operates faster than the tip and tilt acquisition but slower than the data stream in satellite communications. For example, selective targeting can be achieved by applying one of these codes to the local oscillator, ensuring that only the correct target code is coherent with the local oscillator, even if all targets use the exact same carrier frequency. For example, these options may be implemented with filters and splitters, utilizing one tip and tilt detection module per target. Alternatively, there is the possibility to use a single detection module with multiple tones or codes in an intradyne detection scheme, which can be demodulated in the electronic domain. While this decoding may require digital processing, using multiple detection modules could be accomplished with analog electronics. Therefore, the invention offers flexibility in tracking multiple targets, enhancing its applicability in systems where monitoring several beams or signals concurrently may be important.

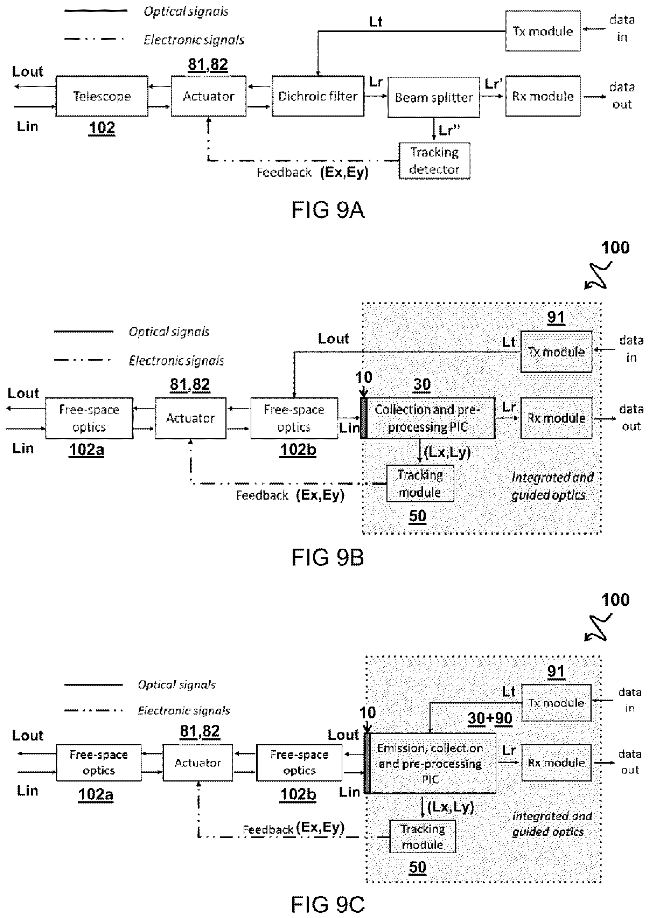

FIG 9A illustrates a general architecture of a free-space optical communication terminal. In general, applications using optical signals to transfer information typically require a mechanism for the two terminals to constantly point at each other to establish optimal emission and reception of the optical signals carrying information. Part of this mechanism may rely on a sensor device capable of measuring relevant properties of the incoming optical beam, such as the incoming direction. The data collected by the sensor can then be processed and used as input to at least one other device (actuator, processing circuit, algorithm, etc.).

The most efficient laser sources, modulators, and detectors used in telecommunication currently available on the market are typically fiber-based. However, in a fiber solution, it may be difficult to isolate the reception channels from the emission one. Indeed, the transmitted signals (Tx) of the outgoing optical beam (Lout) are typically emitted in the order of 100mW-10W power range, while in the case of satellite communication, the reception signals (Rx) of the incoming optical beam (Lin) signals are typically below 10nW, and therefore the rejection of Tx in the Rx channels must be >60dB simply to prevent spurious scattering on Tx from impacting the SNR of the Rx signals. To minimize the size and weight of the terminals it is preferred to send/receive Tx (Lout) and Rx (Lin) via the same telescope. For example, these may be sent/received at different optical wavelengths. This may enable highly selective bulk (free-space) dichroic filters to isolate Tx and Rx.

In general, the direction of the incoming beam may be measured in order to track it using a feedback loop between an actuator such as a fine steering mirror (FSM) and a position-sensitive detector such as a quadcell. However, quad-cells are relatively large surface area detectors and are therefore often limited to a bandwidth on the order of 100 MHz, This can make them incompatible with advanced modulation schemes such as DP-QPSK (Dual-Polarization Quadrature Phase Shift Keying) and wavelength division multiplexing (WDM). Therefore, a dedicated detector for Rx typically needs to be present together with a quadcell to achieve a highspeed data rate, and a bulk free-space beam splitter is therefore required to distribute available optical power in the Rx beam between the tracking and the communication detectors.

In some cases, the tracking detector can be complemented with a focal plane array, which may essentially be a camera sensor, to increase the field of regard during the acquisition phase, i.e., before the optical link is established and locked with a feedback loop between the tracking detector and the actuator. However, the dichroic filter to separate Rx and Tx and the beam splitter to separate the tracking and communication functionalities may impose stringent mechanical constraints on the assembly of a laser communication terminal, in particular in terms of size, weight, alignment tolerance, and protocols.

To improve upon these and other issues, aspects of the present disclosure aim to regroup, at a minimum, the module to detect the Rx communication data and the modules to measure the tip and tilt angles of the incoming optical beam (Lin) into a single photonic integrated circuit, as described herein. This circuit may comprise multiple photonic and electronic readout/control chips packaged together into a monolithic device. In some implementations, such integration may simplify and vastly increase the stability of the mechanical assembly of, e.g., a satellite communication terminal, as well as reduce the volume and weight of the solution. Advantageously, regrouping Tx on the same integrated photonic chip as Rx and tip/tilt can also be envisaged.

FIG 9B illustrates an architecture according to some embodiments, wherein the Tx signals may be generated on the same photonic integrated circuit (PIC) as the collection of Rx (or a separate module), but are recombined together using free-space optics. FIG 9C illustrates an architecture according to other or further embodiments wherein Tx and Rx, as well as tip and tilt signals, are processed on a single device and sent from the device together to the free space optics. For either one of these architectures, the detector apparatus to measure tip/tilt and the data encoded, as well as the modulation apparatus to encode the data on an outgoing beam, can be present directly on the chip or on separate modules that can be plugged into the device as described herein. The first approach can have the advantage of being more compact, but it can be beneficial to have the decoding and encoding modules on separate devices to allow for a more flexible approach that requires the design of a single product.

In some embodiments, the optical system 100 is configured to generate at least one optical data transmission signal Lt. For example, the optical system 100 is configured to transmit an outgoing optical beam "Lout" based on the at least one optical data transmission signal Lt. In a preferred embodiment, e.g. as shown in FIG 9C, the optical system 100 comprises a third photonic circuit 90 configured to receive one or more optical data reception signals Lr and transmit one or more optical data transmission signals Lt. The third photonic circuit 90 may interface with (or be integrated with) the first photonic circuit 30, as described herein. In another or further embodiment, e.g. as shown in FIG 9B, one or more optical data transmission signals Lt may be sent out via a photonic circuit and/or transmission module Tx that operates separately from the first photonic circuit 30.

The third photonic circuit 90 and/or transmission (Tx) module may comprise, or be coupled to, an optical source 91, e.g. laser, configured to generate the one or more optical data transmission signals Lt. Preferably, the optical source is integrated onto the PIC, e.g. as a diode laser or any other integrated light source. In another embodiment, the optical data transmission signal Lt may be generated in an at least partially separate photonic circuit which may still be part of the same PIC, or on a separate PIC.

In some embodiments, the third photonic circuit 90 and/or Tx module comprises one or more optical modulators configured to modulate the optical data transmission signal Lt. For example, the one or more optical modulators are configured to modulate a phase and/or amplitude of the optical data transmission signal Lt resulting in a phase and/or amplitude modulated outgoing optical beam, which may be transmitted from the at least one optical coupling surface 10. In principle, the amplitude and/or phase may also be modulated directly by the optical source, although this may have limited bandwidth. As will be understood, the phase and/or amplitude modulation of the optical beams may be used to transmit data. For example, the one or more optical modulators can be part of the Tx module (as shown in either FIG 9B or 9C) and/or part of the emission, collections, and preprocessing PIC (as shown in FIG 9C). Optionally, the optical system 100 may also comprise one or more optical amplifiers configured to boost the optical data transmission signal Lt, e.g. after modulation. For example, these amplifier(s) may be part of the third photonic circuit 90, and/or be placed anywhere else before the emission of the outgoing optical beam "Lout"

In a preferred embodiment, e.g. as shown in FIG 9C, the outgoing optical beam "Lout" is transmitted via the same (one or more) optical coupling surfaces 10 as used for receiving the incoming optical beam "Lin". For example, the system 100 is configured for full-duplex optical communication, utilizing the at least one optical coupling surface 10 for both receiving and transmitting optical beams Alternatively, or in addition, e.g. as shown in FIG 9B, one or more outgoing optical beam(s) "Lout" may be sent out via another coupling surface (not shown) of the same or other PIC. Most preferably, the at least one optical data transmission signal Lt is transmitted via the first photonic circuit 30, as described herein, e.g., with reference to any of the preceding or succeeding figures. In other words, the same photonic circuit 30 used for receiving optical signals from the optical coupling surface 10 and/or isolating the optical data reception signal Lr, may be used in reverse as a conduit through which the optical data transmission signal Lt is sent to the at least one optical coupling surface 10 resulting in the emission of an outgoing optical beam.

In some embodiments, the optical data transmission signal Lt and the optical data reception signal Lr have different wavelengths. For example, one or more wavelengths constituting the incoming optical beam "Lin" may be different than one or more, preferably all, of the wavelengths constituting the outgoing optical beam "Lout". In other or further embodiments, the system 100 comprises one or more dichroic optical elements configured to separate/combine the incoming optical beam "Lin" and the optical data transmission signal Lt. In principle, the different wavelengths may be separated or combined inside and/or outside an integrated photonic circuit. In case the optical data transmission signal Lt and optical data reception signal Lr are passed through a shared photonic circuit (e.g. the first photonic circuit 30), it will be understood that the components of the shared circuit may be selected and/or configured so that they are able to operate at least within a range of wavelengths including those of the optical signal Lr and Lt. Depending on the sufficiency or efficiency of the dichroic optical element(s), the third photonic circuit 90 may comprise one or more wavelength filters configured to selectively pass the optical data reception signal Lr before a respective detector.

In some embodiments of the optical system, multiple receiving and/or emitting surfaces may be integrated onto the same photonic integrated circuit (PIC). In these configurations, each optical coupling surface may address different optical beams, allowing the system to process multiple incoming or outgoing beams simultaneously. This capability can be advantageous for applications requiring isolation of transmission (Tx) and reception (Rx) paths, or for implementing wavelength multiplexing to increase data throughput. Each optical coupling surface may be associated with its own dedicated photonic processor, enabling independent processing of each beam. Alternatively, multiple surfaces can share a common photonic processor, optimizing resource utilization on the PIC and simplifying the overall system architecture. By integrating multiple surfaces, the system may handle complex beam configurations or multiple beams more effectively. For instance, one optical coupling surface can be dedicated to receiving data while another handles transmission, ensuring minimal interference between the two processes. This modularity may enhance the system's versatility and makes it suitable for advanced optical communication networks where simultaneous multi-beam processing is used.

In some embodiments, one or more optical coupling surfaces can be designed to perform wavelength separation directly, alleviating the need for further dichroic filters or beam splitters. For example, the optical coupling surface 10, as described herein, may be configured to selectively direct light of a first wavelength into one set of waveguides (e.g. the first set of waveguides 20) and direct light of another, second wavelength into another set of waveguides (not shown) and/or receive light of the second wavelength from said other set of waveguides. For example, by forming the optical coupling surface 10 with a particular photonic structure, the coupling surface may simultaneously act as a dichroic filter. In this case, the same optical coupling surface 10 may be used while using separate optical circuits for receiving and transmitting optical beams. For example, by fine-tuning the grating structure of the coupling surface, the system can intrinsically split or combine beams of different wavelengths at the point of coupling. This may allow a single photonic processor to handle multiple wavelengths or separate processors can be employed for each wavelength if desired. In these or other embodiments, additional on-chip filters may be incorporated to provide sufficient rejection of transmitted signals in the reception path, enhancing the isolation between Tx and Rx channels and improving overall system performance. For example, these filters can be implemented using integrated photonic components such as ring resonators, Mach-Zehnder interferometers, or Bragg gratings. The ability to perform wavelength separation on-chip can reduce system complexity and can lead to improvements in size, weight, and power consumption.

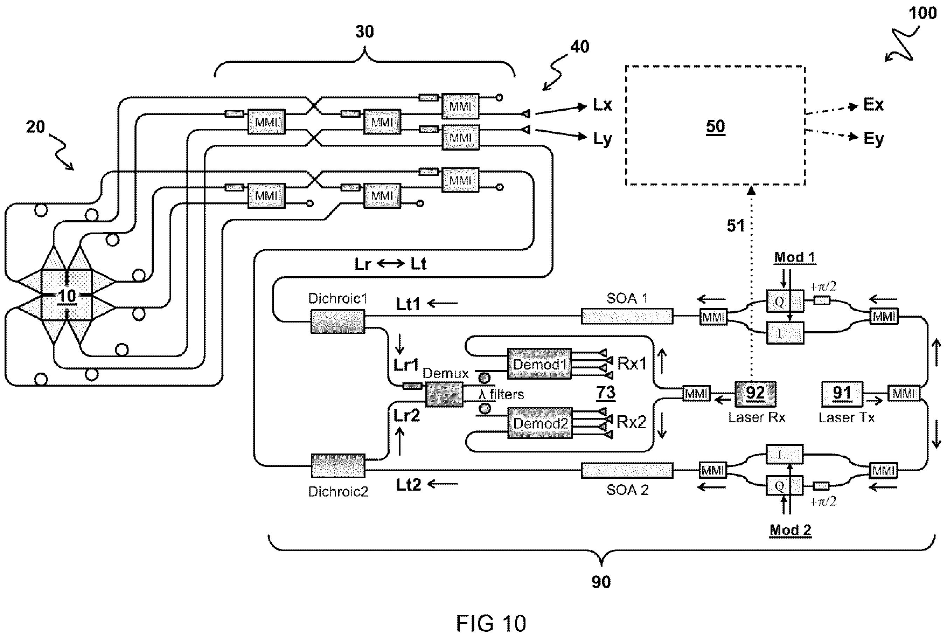

In some embodiments, the incoming optical beam "Lin" and/or the outgoing optical beam "Lout" comprises at least two data signals encoded in two different polarizations of the respective beam. In one embodiment, e.g. as was already discussed with reference to FIG 6, the optical coupling surface 10 is configured to receive the incoming optical beam "Lin" with two (orthogonal) polarizations and funnel respective light signals into respective waveguides dependent on the respective polarization. In another or further embodiment, e.g. as is the case for FIG 10 (discussed in further detail below), the optical coupling surface 10 is (also) configured to send out a beam with two (orthogonal) polarizations based on respective light signals received via respective waveguides. As will be appreciated, the present teachings are in principle compatible with any type of digital modulation technique and wavelength division multiplexing by designing the integrated components accordingly based on existing architecture for fiber telecommunication.

FIG 10 illustrates a schematic diagram of an integrated optical communication system 100 implementing the present teachings according to some embodiments. Advantageously, this or other implementations may allow telecommunication based on Quadrature Amplitude Modulation (QAM), both in emission and reception, as well as the measurement of tip and tilt to be located on the same device. Notably, this architecture demonstrates the integration of multiple functions including beam direction sensing, signal reception, and signal transmission on a single photonic integrated circuit, enabling a compact and efficient optical communication system particularly suitable for applications where size, weight, and power consumption are critical factors, such as satellite communications.

In some embodiments, e.g. as shown, the system 100 comprises an optical coupling surface 10 configured to receive incoming light, which is connected to a set of waveguides 20. Optionally, the waveguides 20 may be provided with phase matching loops (indicated by circles along the path), e.g. to match the respective length of each path. The set of waveguides 20 feeds into a first photonic circuit 30 that processes the received signals to output tip Lx and tilt Ly signals indicative of the incoming beam direction. In this figure, the second photonic circuit as described earlier is not shown. The system further includes a third photonic circuit 90 comprising dichroic filters (Dichroic 1 and 2) for separating transmitted (Lt) and received (Lr) signals, demultiplexers (Demux) and demodulators (Demod) for processing received signals, and semiconductor optical amplifiers (SOA 1 and SOA 2). Additionally, the system incorporates lasers for reception (Laser Rx) and transmission (Laser Tx), along with various components for signal modulation and demodulation.

In some embodiments, e.g. as shown, the system 100 comprises a compact array of dual-polarization optical couplers. In one embodiment, each coupler may have 2 input/output (IO) channels, one for horizontal polarization state, and another for vertical polarization states. In another or further embodiment, the array has 4 IO for each polarization state, 8 in total. In other or further embodiments, all the optical signals in the PIC propagate through a single-mode waveguide, carrying a single polarization state (usually TE0).

In some embodiments, e.g. as shown, the system 100 comprises a photonic processor, e.g. composed of a mesh of Mach-Zender interferometer (MZI). In one embodiment, the role of the photonic processor is to link the 8 optical waveguides coming from the optical coupler array with 4 optical waveguides; 1 carrying information on the tilt angle, 1 carrying information on the tip angle, 2 communication signals, one for each polarization, for both Tx and Rx. In another or further embodiment, the photonic processor can be reconfigured by modifying the control of phase shifters. In other or further embodiments, if the fabrication is reliable enough, the photonic processor can be designed to be composed of passive elements only, reducing the electronic overhead and energy consumption.

In some embodiments, e.g. as shown, the system 100 comprises detector modules used to measure tip and tilt directly at the output of the photonic processor while the communication signals are connected to the following block. In one embodiment, the output of the photonic processor creates 4 additional signals that may be rejected with little consequence on the photon budget. In another or further embodiment, the photonic processor is designed such that all 4 signals are strictly zero when the incoming beam is perfectly aligned (no tip and tilt).

In some embodiments, e.g. as shown, the system 100 comprises a filter block, composed of at least a dichroic beam splitter to separate Tx and Rx based on wavelength, and additional bandpass filters. In one embodiment, these filters and dichroic splitters can be based on asymmetric MZIs, ring resonators, Bragg gratings, Arrayed waveguide gratings, or a combination of these elements. In another or further embodiment, most free-space optical communication applications would require these filters to be reconfigurable dynamically, in particular, to account for Doppler shifts in case of relative motion between terminals, as well as gender switching operation required when operating a network of 3 or more terminals. In other or further embodiments, the filter block can also contain a polarization demultiplexer in the Rx section.

In some embodiments, e.g. as shown, the system 100 comprises a demodulator module, e.g. composed of an interferometer (usually 2x4 multimode interferometer or MMI), and/or a local oscillator laser source whose wavelength may be locked to the Rx signal. In one embodiment, the local oscillator is used as an interferometric reference to allow for the measurement of both the phase and amplitude of the Rx signal, which is used for demodulating QAM signals. In another or further embodiment, both polarizations may have their own interferometers but can potentially share the same local oscillator if the Rx signals were encoded using the same laser source. In other or further embodiments, the demodulator can be made compatible with WDM by placing an AWG demultiplexer before the demodulators and having as many output channels of the AWG and as many demodulators as there are WDM channels.

In some embodiments, e.g. as shown in FIG 10, the system 100 comprises one or more modulators configured to modulate an amplitude and/or phase of one or more optical data transmission signals Lt. In the embodiment shown, the system 100 comprises a master oscillator laser source (Laser Tx), and two modulators (Mod 1 and Mod2), which are quad Mach-Zender IQ modulators capable of encoding data in the phase and amplitude of the optical signals (one for each polarization). Each modulator arm (Mod 1 and Mod 2) may employ a quadrature (Q) and in-phase (I) configuration to achieve complex modulation. Each modulator arm may utilize a combination of fixed and variable phase shifters to implement the IQ modulation scheme. In one embodiment, e.g. as shown, each modulator arm includes a fixed n/2 phase shifter. This constant phase shift may create a 90-degree phase difference between the I and Q components, enabling the generation of complex symbols in the IQ plane. In another or further embodiment, e.g. as shown, each modulator arm comprises a Mach-Zender intensity and sign (+ or-) modulator. For example, this may enable the introduction of a modulated amplitude between +1 and -1. In principle, the modulators may generate any point in the complex IQ plane, enabling modulation formats such as QPSK, 16-QAM, or higher-order QAM schemes. The outputs of each modulator arm may be amplified by semiconductor optical amplifiers (SOA 1 and SOA 2) before being combined and routed through the dichroic filters (Dichroic 1 and Dichroic 2) to the optical coupling surface for transmission. The dual-polarization setup (Mod 1 and Mod 2) may double the potential data rate by utilizing both orthogonal polarizations of the optical signal. In one embodiment, the laser source 91 is tunable or supports at least two operation wavelengths if gender switching is desired. In another or further embodiment, the modulator can be made compatible with WDM by replacing the laser source with an integrated frequency comb generator based on ring resonators and replacing the achromatic phase shifter in the quad Mach-Zender IQ modulator with a series of ring resonator modulators each tuned to a specific line of the frequency comb.

In some embodiments, e.g. as shown in FIG 10, the system 100 includes components for demodulating received optical signals (Lr1 and Lr2). The light source 92, labeled as Laser Rx, may function as a local oscillator, providing a reference signal for phase-sensitive demodulation in coherent detection systems. Incoming signals Lr1 and Lr2, which may each represent a different polarization state, pass through a demultiplexer (Demux). The Demux separates the incoming signals into their constituent wavelength channels when wavelength division multiplexing (WDM) is used, allowing for the processing of multiple data streams carried on different wavelengths. After demultiplexing, each signal undergoes demodulation in the Demod blocks. These demodulators can use coherent detection techniques, utilizing the reference signal from the Laser Rx. The demodulation process typically involves mixing the incoming signal with the local oscillator in a 90-degree optical hybrid, followed by balanced photodetection. For each polarization and wavelength channel, the demodulation may produce four electrical signals: in-phase (I) and quadrature (Q) components for both the X and Y polarizations. For a dual-polarization signal on a single wavelength, this may result in eight different signals (Ix, Qx, Iy, Qy for each of Lr1 and Lr2). These eight signals may characterize the amplitude and phase of the received optical signal in both polarization states. The Rx1 and Rx2 blocks in the diagram represent the outputs of this demodulation process, each containing four of the eight total signals. These electrical signals can be further processed by a set of photodetectors and/or digital signal processing units (not shown) to recover the transmitted data, compensate for chromatic dispersion and polarization mode dispersion, and perform other signal processing tasks. This demodulation architecture may support modulation formats such as dual-polarization quadrature phase-shift keying (DP-QPSK) or higher-order quadrature amplitude modulation (QAM) schemes, allowing for high spectral efficiency and increased data rates in optical communication systems.

In some embodiments, a single multimode optical coupler rather than multiple single-mode couplers as shown in FIG 10 is used. In one embodiment, the coupler array in FIG 10 may have an intrinsic coupling loss due to the overlap mismatch between the point spread function (PSF) of a telescope and the discrete and disjoint set of eigenmodes of the coupler array. In another or further embodiment, a single multimode coupler can be designed to have a perfect overlap with the PSF of the telescope and therefore improve the coupling efficiency. In other or further embodiments, due to the multimode operation of the optical coupler, mode demultiplexers are required to convert the optical signal into a single-mode waveguide (TE0) that can be processed with the usual integrated photonic components.

As will be appreciated, the present teachings may also be compatible with Quantum cryptography protocols such as Quantum Key Distribution (QKD), enabling secure communication channels based on quantum mechanics. For example, the PIC may integrate or couple to an entangled photon source, single-photon source, and/or other components used for quantum state generation and manipulation. In one embodiment, the PIC includes two optical coupling surfaces, each used to communicate with different recipients (commonly referred to as "Alice" and "Bob" in cryptography terminology). In one embodiment, the recipients may emit beacon signals toward the system, which are tracked using the methods described herein. The two optical coupling surfaces can then be utilized to emit and distribute entangled photon pairs to the recipients, with each photon of the pair directed to a different recipient. This configuration may facilitate a quantum secure communication channel between the recipients, leveraging the entanglement properties of the photons to ensure security.

Of course, it is to be appreciated that any one of the above embodiments or processes may be combined with one or more other embodiments or processes to provide even further improvements in design and advantages. It is appreciated that this disclosure offers particular advantages to optical communication, as well as applications such as atomic force microscopy, star-tracking systems (which may require a local oscillator interfering with one of the spectral lines), laser-guided ammunition guidance systems, and wavefront sensors (e.g., forming an array to create a Shack-Hartmann type sensor). In general, the invention can be applied to any application wherein precise detection and correction of beam alignment, angular deviations, or wavefront characteristics are desired.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate a synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1. An optical system (100) for processing one or more optical beams, the system (100) comprising
at least one optical coupling surface (10) configured to receive an incoming optical beam (Lin),
a first set of waveguides (20) configured to optically couple with the at least one optical coupling surface (10) to respectively receive a first set of optical signals (L1) resulting from the incoming optical beam (Lin);
a first photonic circuit (30) configured to combine respective signals of the first set of optical signals (L1) to cause generation of a second set of optical signals (L2) respectively transmitted via a second set of waveguides (40),
wherein the second set of optical signals (L2) comprises
a tip signal (Lx) indicative of a tip angle (Ax) of the incoming optical beam (Lin) along a first direction (X) with respect to the optical coupling surface (10) and/or indicative of a first relative displacement (DX) of the incoming optical beam (Lin) along the first direction (X); and
a tilt signal (Ly), indicative of a tilt angle (Ay) of the incoming optical beam (Lin) along a second direction (Y) with respect to the optical coupling surface (10), perpendicular to the first direction (X), and/or indicative of a second relative displacement (DY) of the incoming optical beam (Lin) along the second direction (Y).

2. The optical system (100) according to the preceding claim, wherein first photonic circuit (30) is configured to cause generation of the tip signal (Lx) and tilt signal (Ly) in isolation from each other, wherein the tip signal (Lx) is transmitted via a first waveguide (41) of the second set of waveguides (40), and the tilt signal (Ly) is transmitted via a second waveguide (42) of the second set of waveguides (40), separate from the tip signal (Lx).

3. The optical system (100) according to the preceding claim, wherein the incoming optical beam (Lin) is an optical communication beam used for receiving data, wherein the first photonic circuit (30) is configured to generate the second set of optical signals (L2) further comprising an optical data reception signal (Lr) indicative of the data being received via the optical communication beam; wherein the optical data reception signal (Lr) is transmitted via a third waveguide (43) of the second set of waveguides (40), separate from the tip signal (Lx) and separate from the tilt signal (Ly).

4. The optical system (100) according to the preceding claim,
wherein the first photonic circuit (30) is configured to minimize an optical intensity of the tip signal (Lx) when the tip angle (Ax) is zero and/or when the first relative displacement (DX) is zero;
wherein the first photonic circuit (30) is configured to minimize an optical intensity of the tilt signal (Ly) when the tilt angle (Ay) is zero and/or when the second relative displacement (DY) is zero; and
wherein the first photonic circuit (30) is configured to maximize an optical intensity of the optical data reception signal (Lr) when the tip angle (Ax) is zero and the tilt angle (Ay) is zero and/or when the first relative displacement (DX) is zero and the second relative displacement (DY) is zero.

5. The optical system (100) according to any of the preceding claims, wherein the first photonic circuit (30) comprises an optical interferometric arrangement configured to combine the first set of optical signals (L1), wherein the tip signal (Lx) and the tilt signal (Ly) are generated by constructive and destructive interference of different subcomponents (M00,M10,M01) in each of the first set of optical signals (L1).

6. The optical system (100) according to any of the preceding claims, wherein the optical coupling surface (10) comprises a single optical coupler with at least four outputs configured to couple different parts of the incoming optical beam (Lin) into the first set of waveguides (20).

7. The optical system (100) according to any of the preceding claims, wherein different waveguides of the first set of waveguides (20) are connected at different locations around the optical coupling surface for collecting different optical signals resulting from the incoming optical beam (Lin), wherein the first photonic circuit (30) comprises a set of optical combiners (31,32), each configured to combine a respective pair of signals (L1a,L1b; L1c,L1d) from opposite sides of the optical coupling surface (10) to generate the tip signal (Lx) and the tilt signal (Ly) separately.

8. The optical system (100) according to any of the preceding claims, wherein the first set of waveguides are configured to receive different spatial modes of the incoming optical beam via mode demultiplexing, wherein two waveguides on each side of two opposing sides of the optical coupling surface (10) are configured as a mode demultiplexer such that a fundamental mode (TE0) is funneled into one waveguide and a higher-order mode (TE1) is funneled into an adjacent waveguide.

9. The optical system according to any of the preceding claims, wherein the first set of waveguides (20) comprises at least six different waveguides optically connected to the optical coupling surface (10), wherein the first photonic circuit (30) and/or second photonic circuit (50) is configured to output signals comprising the tip signal (Lx) and the tilt signal (Ly) selectively for at least one of two different polarizations of the incoming optical beam (Lin).

10. The optical system (100) according to any of the preceding claims, comprising a set of photodetectors (70) configured to receive optical output signals for each of the tip signal (Lx) and tilt signal (Ly); and to generate a set of electrical signals (Ex,Ey) indicative of a magnitude and/or direction of the tip angle (Ax) and/or first relative displacement (DX), and the tilt angle (Ay) and/or second relative displacement (DY).

11. The optical system according to any of the preceding claims, comprising a second photonic circuit (50) configured to receive at least one of the tip signal (Lx) and the tilt signal (Ly) and to process it interferometrically with a reference optical signal (Lo,Ld) to generate a third set of optical signals (L3).
wherein the reference optical signal is derived from a part of the incoming optical beam (Lin); or
wherein the reference optical signal is derived from an externally generated local oscillator signal (Lo).

12. The optical system according to the preceding claim, wherein the second photonic circuit (50) comprises a set of optical combiners configured to combine the tip signal (Lx) and/or tilt signal (Ly) with the reference optical signal (Lo,Ld) in an interferometric arrangement.
wherein the interferometric processing generates, for each of the tip signal (Lx) and the tilt signal (Ly), two separate optical output signals (Lx+,Lx-,Ly+,Ly-) indicative of positive and negative directions of the tip angle and tilt angle.
wherein the system (100) is configured to have the first subset of signals (Lx+,Lx-) measured by a first balanced photodiode (71) for generating a first electrical signal (Ex) indicative of the tip angle (Ax) and/or first relative displacement (DX); configured to have the second subset of signals (Ly+,Ly-) measured by a second balanced photodiode (72) for generating a second electrical signal (Ey) indicative of the tilt angle (Ay) and/or second relative displacement (DY).

13. The optical system according to the preceding claim, wherein the electrical signals (Ex,Ey) are used to control one or more actuators configured to adjust the angular direction (Ax,Ay) and/or position (DX,DY) of the incoming optical beam (Lin) on the optical coupling surface (10), wherein a magnitude of the electrical signals (Ex,Ey) is proportional to a deviation of the incoming optical beam (Lin) from an optimal or predetermined angular direction (Ax,Ay) and/or position (DX,DY) of the incoming optical beam (Lin) on the optical coupling surface (10).

14. The optical system (100) according to any of the preceding claims, configured to generate at least one optical data transmission signal (Lt), and to emit, based on the at least one optical data transmission signal (Lt), an outgoing optical beam (Lout) via the same at least one optical coupling surface (10) as used for receiving the incoming optical beam (Lin).

15. A method for processing one or more optical beams, the method comprising
receiving an incoming optical beam (Lin) onto at least one optical coupling surface (10);
receiving a first set of optical signals (L1) resulting from the incoming optical beam (Lin) via a first set of waveguides (20) which are optically coupled with the at least one optical coupling surface (10);
combine respective signals of the first set of optical signals (L1) using a first photonic circuit (30) to cause generation of a second set of optical signals (L2) respectively transmitted via a second set of waveguides (40);
wherein the second set of optical signals (L2) comprises
a tip signal (Lx) indicative of a tip angle (Ax) of the incoming optical beam (Lin) along a first direction (X) with respect to the optical coupling surface (10) and/or indicative of a first relative displacement (DX) of the incoming optical beam (Lin) along the first direction (X); and
a tilt signal (Ly), indicative of a tilt angle (Ay) of the incoming optical beam (Lin) along a second direction (Y) with respect to the optical coupling surface (10), perpendicular to the first direction (X), and/or indicative of a second relative displacement (DY) of the incoming optical beam (Lin) along the second direction (Y).
